# EUROPEAN PATENT SPECIFICATION

(11) **EP 4 567 550 B1**
(45) Date of publication and mention of the grant of the patent: **05.08.2026**
(21) Application number: 22955087.6
(22) Date of filing: 11.08.2022
(51) Int. Cl.: G06F 1/16, F16M 11/04, F16M 11/12, G09F 9/30, G09F 9/33, F16M 11/08, F16M 11/18, F16M 11/20, F16M 11/24

(54) **DISPLAY DEVICE**
ANZEIGEVORRICHTUNG
DISPOSITIF D'AFFICHAGE

(43) Date of publication of application: 11.06.2025
(73) Proprietor: LG Electronics Inc., Yeongdeungpo-gu Seoul 07336 (KR)
(72) Inventor: KIM, Chanwoo, Seoul 06772 (KR); CHOO, Junuook, Seoul 06772 (KR)
(74) Representative: Vossius & Partner Patentanwälte Rechtsanwälte mbB
(86) International application number: PCT/KR2022/012057
(87) International publication number: WO 2024/034712

(56) References cited:
- EP-A2- 2 816 440
- JP-A- 2020 134 927
- KR-A- 20180 024 713
- KR-A- 20200 088 043
- KR-B1- 100 715 729
- KR-B1- 101 720 178
- US-A1- 2009 261 223
- US-A1- 2010 321 869

## Description

### [Technical Field]

The present disclosure relates to a display device. More particularly, the present disclosure relates to a display device capable of changing the curvature of a display panel.

### [Background Art]

As the information society develops, the demand for display devices is also increasing in various forms. In response to this, various display devices such as Liquid Crystal Display Device (LCD), Electroluminescent Display (ELD), Vacuum Fluorescent Display (VFD), and Organic Light Emitting Diode (OLED) have been researched and used in recent years.

Among them, an OLED panel may display images by depositing an organic layer that may emit light autonomously on a substrate on which a transparent electrode is formed. OLED panel is not only thin but also has flexible characteristics. Much research has been conducted on the structural characteristics of display device equipped with such an OLED panel.

In related art, US2010321869A1 discloses a display device comprising a circular stand with rotation features.

### [Disclosure]

### [Technical Problem]

An object of the present disclosure is to solve the above-described problems and other problems.

Another object of the present disclosure may be to provide a structure that may freely change the curvature of a display panel.

Another object of the present disclosure may be to provide a mechanism that may freely change the curvature of a display.

Another object of the present disclosure may be to provide a wiring structure that facilitates the up-down movement of a display.

Another object of the present disclosure may be to provide a stand structure that facilitates the forward-rearward and left-right movement or rotation of the display device.

### [Technical Solution]

According to an aspect of the present disclosure, there is provided a display device including: a display panel; a rear cover which is positioned behind the display panel, and to which the display panel is coupled; a back case which is positioned behind the rear cover, and to which the rear cover is coupled; and a stand coupled to a lower end of the back case, wherein the stand comprises: a stand case forming a bottom surface; and a circle-shaped disk fixed to the bottom surface of the stand case. The invention is set out in the appended set of claims.

### [Advantageous Effects]

According to at least one embodiment of the present disclosure, a structure capable of freely changing the curvature of a display panel may be provided.

According to at least one embodiment of the present disclosure, a mechanism capable of freely changing the curvature of a display may be provided.

According to at least one embodiment of the present disclosure, a wiring structure that facilitates the up-down movement of a display may be provided.

According to at least one embodiment of the present disclosure, a stand structure that facilitates forward-rearward and left-right movement or rotation of a display device may be provided.

Further scope of applicability of the present disclosure will become apparent from the following detailed description. However, it should be understood that the detailed description and specific embodiments such as preferred embodiments of the present disclosure are given by way of illustration only.

### [Description of Drawings]

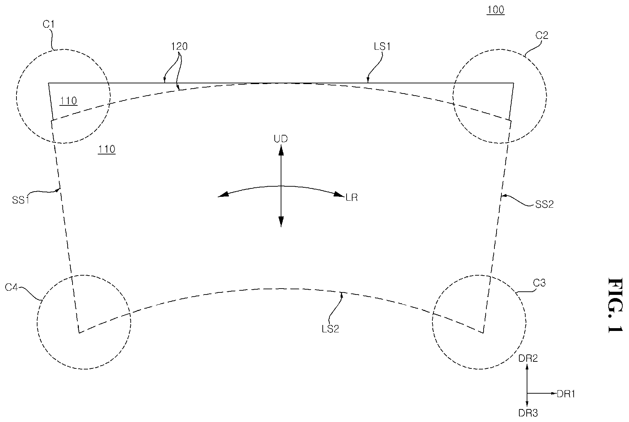

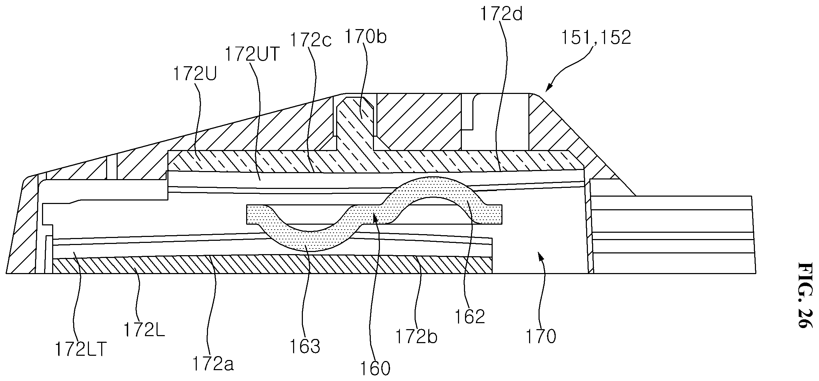

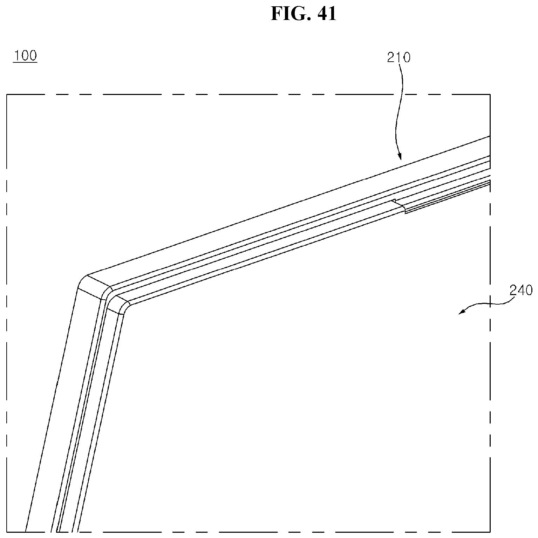

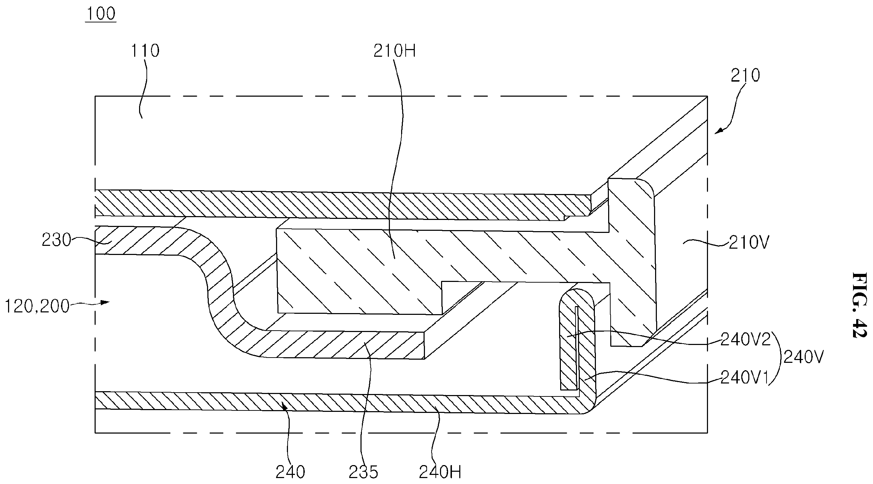

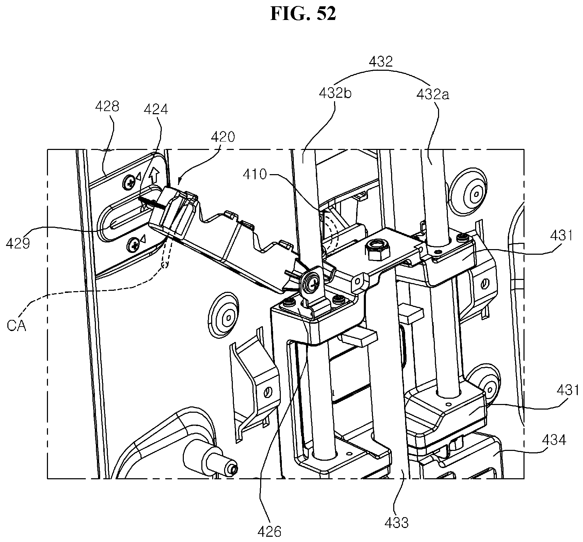

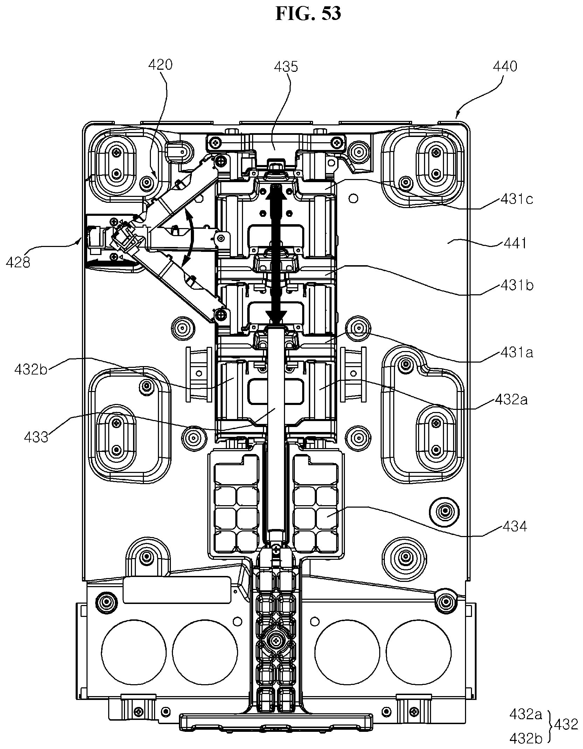

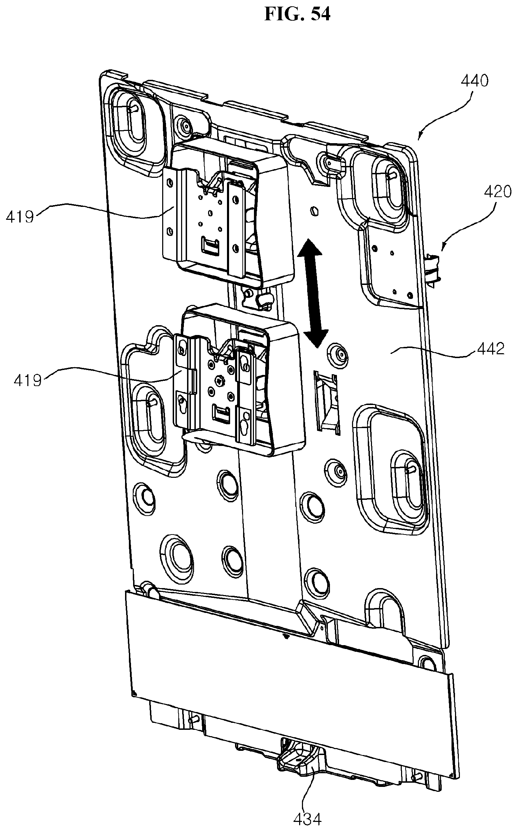

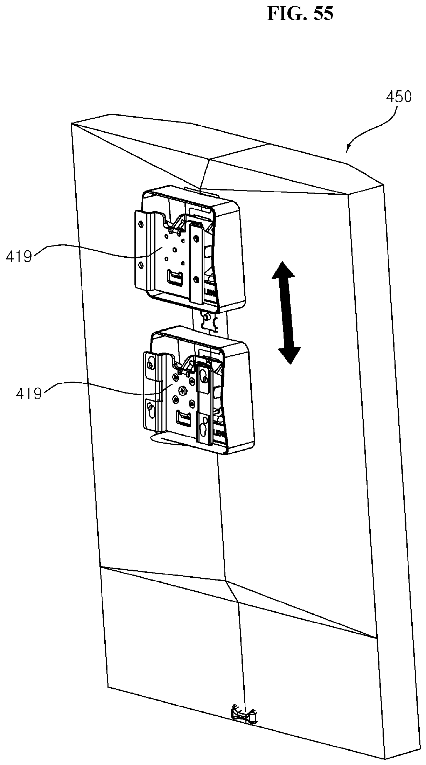

FIGS. 1 to 63 are diagrams illustrating examples of a display device according to embodiments of the present disclosure.

### [Mode for Invention]

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings.

It will be understood that although the terms first, second, etc. may be used herein to describe various elements, these elements should not be limited by these terms. These terms are only used to distinguish one element from another.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

Hereinafter, an organic light emitting diode (OLED) display panel is described as an example for the display panel, but the display panel applicable to the present disclosure is not limited to an OLED panel.

In addition, hereinafter, the display device may include a first long side LS1, a second long side LS2 opposite to the first long side LS1, a first short side SS1 adjacent to one end of the first long side LS1 and the second long side LS2, and a second short side SS2 opposite to the first short side SS1.

Here, the first short side area SS1 may be referred to as a first side area, the second short side area SS2 may be referred to as a second side area opposite to the first side area, the first long side area LS1 may be referred to as a third side area which is adjacent to the first side area and the second side area and positioned between the first side area and the second side area, and the second long side area LS2 may be referred to as a fourth side area which is adjacent to the first side area and the second side area and positioned between the first side area and the second side area and opposite to the third side area.

In addition, for convenience of explanation, it is illustrated and described that the lengths of the first and second long sides LS1, LS2 are longer than the lengths of the first and second short sides SS1, SS2, but it may also be possible that the lengths of the first and second long sides LS1, LS2 are approximately the same as the lengths of the first and second short sides SS1, SS2.

In addition, hereinafter, a first direction DR1 may be a direction parallel to the long side LS1, LS2 of the display device, and a second direction DR2 may be a direction parallel to the short side SS1, SS2 of the display device. A third direction DR3 may be a direction perpendicular to the first direction DR1 and/or the second direction DR2.

The first direction DR1 and the second direction DR2 may be collectively referred to as a horizontal direction. In addition, the third direction DR3 may be referred to as a vertical direction.

The side on which the display device displays an image may be referred to as a front or a front surface. When the display device displays an image, the side from which an image cannot be observed may be referred to as a rear or a rear surface. When viewing the display from the front or the front surface, the side of the first long side LS1 may be referred to as an upper side or an upper surface. Similarly, the side of the second long side LS2 may be referred to as a lower side or a lower surface. Similarly, the side of the first short side SS1 may be referred to as a left side or a left surface, and the side of the second short side SS2 may be referred to as a right side or a right surface.

In addition, the first long side LS1, the second long side LS2, the first short side SS1, and the second short side SS2 may be referred to as an edge of the display device. In addition, a point where the first long side LS1, the second long side LS2, the first short side SS1, and the second short side SS2 meet each other may be referred to as a corner. For example, a point where the first long side LS1 and the first short side SS1 meet may be referred to as a first corner C1, a point where the first long side LS1 and the second short side SS2 meet may be referred to as a second corner C2, a point where the second short side SS2 and the second long side LS2 meet may be referred to as a third corner C3, and a point where the second long side LS2 and the first short side SS1 meet may be referred to as a fourth corner C4.

Here, the direction from the first short side SS1 toward the second short side SS2 or the direction from the second short side SS2 toward the first short side SS1 may be referred to as a left-right direction LR. The direction from the first long side LS1 toward the second long side LS2 or the direction from the second long side LS2 toward the first long side LS1 may be referred to as an up-down direction UD.

Referring to FIG. 1, a display panel 110 may be coupled to a plate 120. The plate 120 may be flexible. The plate 120 may be referred to as a flexible plate 120, a frame 120, a module cover 120, or a rear cover 120. The display panel 110 may be positioned in front or on the front surface of the plate 120. The display panel 110 may be flexible. For example, the display panel 110 may be an OLED panel.

The display panel 110 may be provided on the front surface of the display device 100 and may display an image. The display panel 110 may output an image by dividing an image into multiple pixels and adjusting the color, brightness, and saturation for each pixel. The display panel 110 may generate light corresponding to the color of red, green, or blue according to a control signal.

The display device 100 may have a variable curvature. The left and right sides of the display device 100 may move forward. For example, when viewing an image from the front of the display device 100, the display device 100 may be concavely curved. At this time, the plate 120 may be bent with the same curvature as the display panel 110. Alternatively, the display panel 110 may be bent in correspondence with the curvature of the plate 120.

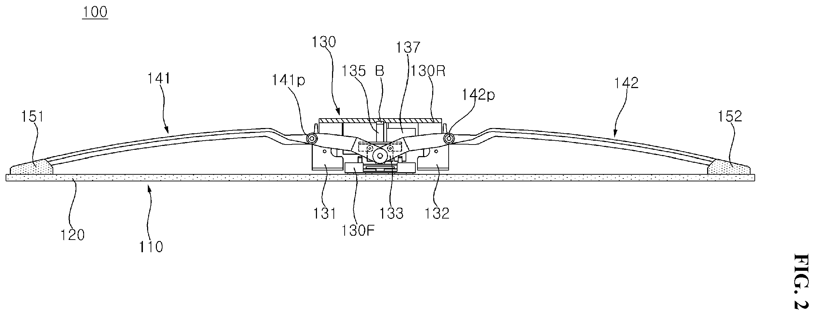

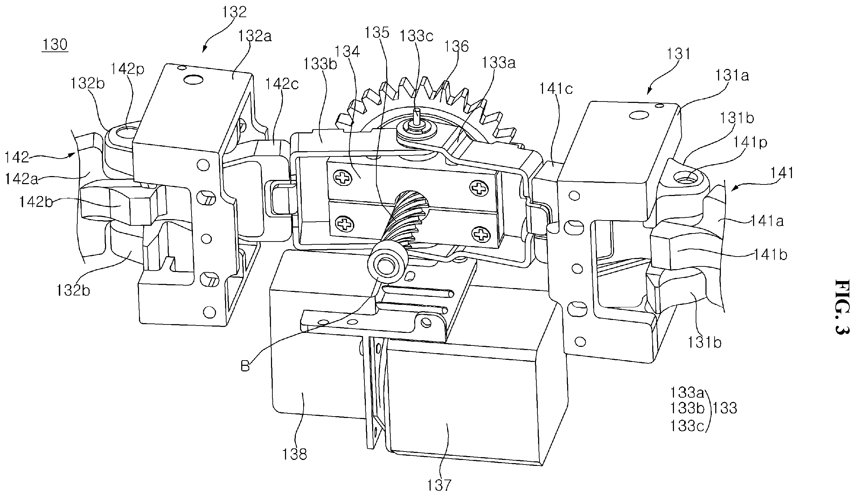

Referring to FIGS. 2 and 3, the plate 120 may be coupled to the rear of the display panel 110. The plate 120 may support the display panel 110 at the rear of the display panel 110. The plate 120 may have a shape corresponding to the display panel 110.

A driving module 130 may be coupled to the rear of the plate 120. A front bracket 130F, a rear bracket 130R, and a wing bracket 131, 132 may be positioned at the rear of the plate 120. The front bracket 130F may be coupled or fixed to the rear of the plate 120. The rear bracket 130R may be positioned at the rear of the front bracket 130F, spaced apart from the front bracket 130F, and face the front bracket 130F.

The wing bracket 131, 132 may include a bracket frame 131a, 132a and a wing holder 131b, 132b. The bracket frame 131a, 132a may have a square box shape. The wing holder 131b, 132b may be formed on one side of the bracket frame 131a, 132a. The wing holder 131b, 132b may protrude from one side of the bracket frame 131a, 132a. There may be a pair of wing holders 131b, 132b. The pair of wing holders 131b, 132b may be opposite to each other.

There may be a plurality of wing brackets 131, 132. The plurality of wing brackets 131, 132 may include a first wing bracket 131 and a second wing bracket 132. The first wing bracket 131 may be coupled or fixed to the front bracket 130F and/or the rear bracket 130R, and may be opposite to the second wing bracket 132 with respect to the front bracket 130F. The second wing bracket 132 may also be coupled or fixed to the front bracket 130F and/or the rear bracket 130R.

A wing 141, 142 may include a blade 141a, 142a, a neck 141b, 142b, and a lever 141c, 142c. For example, the wing 141, 142 may be made of metal. For another example, the wing 141, 142 may be made of aluminum alloy. The blade 141a, 142a may be an elongated plate and may have a rib to ensure rigidity. The lever 141c, 142c and the neck 141b, 142b may be formed at one end of the blade 141a, 142a. The neck 141b, 142b may connect the lever 141c, 142c and the blade 141a, 142a at between the lever 141c, 142c and the blade 141a, 142a. The width of the neck 141b, 142b may be smaller than the width of the lever 141c, 142c, and the width of the lever 141c, 142c may be smaller than the width of the blade 141a, 142a. A pivot shaft 141p, 142p may be formed in the neck 141b, 142b. The pivot shaft 141p, 142p may be inserted into the wing holder 131b, 132b. The wing 141, 142 may pivot around the pivot shaft 141p, 142p and the wing holder 131b, 132b.

A first wing 141 may be rotatably or pivotally coupled to the first wing bracket 131, and a second wing 142 may be rotatably or pivotally coupled to the second wing bracket 132. The first wing 141 may be symmetrical with respect to the drive unit 130 with respect to the second wing 142.

A sliding mount 151, 152 may be coupled or fixed to the rear or rear surface of the plate 120. A first sliding mount 151 may be positioned adjacent to the left side of the plate 120, and a second sliding mount 152 may be positioned adjacent to the right side of the plate 120. The distal end of the first wing 141 may be movably coupled to the first sliding mount 151. The distal end of the second wing 142 may be movably coupled to the second sliding mount 152.

A flip frame 133 may be positioned between the lever 141c of the first wing 141 and the lever 142c of the second wing 142, and may be coupled to the lever 141c, 142c. For example, the flip frame 133 may be made of metal. The flip frame 133 may include a first frame 133a and a second frame 133b. For example, the first frame 133a may be U-shaped, and the second frame 133b may be U-shaped. The first frame 133a may be pivotally connected to the second frame 133b. A pivot pin 133c may penetrate the first frame 133a and the second frame 133b to connect the first frame 133a and the second frame 133b. The first frame 133a may pivot with respect to the second frame 133b, and the second frame 133b may pivot with respect to the first frame 133a. The first frame 133a may be fixed or coupled to the lever 141c of the first wing 141, and the second frame 133b may be fixed or coupled to the lever 142c of the second wing 142.

A moving block 134 may be positioned inside the flip frame 133. The moving block 134 may be positioned between the first frame 133a and the second frame 133b of the flip frame 133.

A lead screw 135 may be inserted into the moving block 134. The moving block 134 may move in the lead screw 135 according to the rotation of the lead screw 135. When the lead screw 135 rotates and counter-rotates, the moving block 134 may reciprocate on the lead screw 135.

The lead screw 135 may be coupled to a driving gear 136 and may rotate with the driving gear 136. The driving gear 136 may face the rear surface of the plate 120 (see FIG. 2) and may rotate. The lead screw 135 may be a rotational shaft of the driving gear 136. The bearing B may be coupled to one end and/or both ends of the lead screw 135. One end of the lead screw 135 may be inserted into a front bearing B and rotated, and the other end of the lead screw 135 may be inserted into a rear bearing B and rotated. For example, the lead screw 135 may be press-fitted into the front bearing B and the rear bearing B.

A motor 137 may be positioned below the moving block 134. The motor 137 may provide rotational power. A gear box 138 may transmit the rotational power of the motor 137 to the driving gear 136.

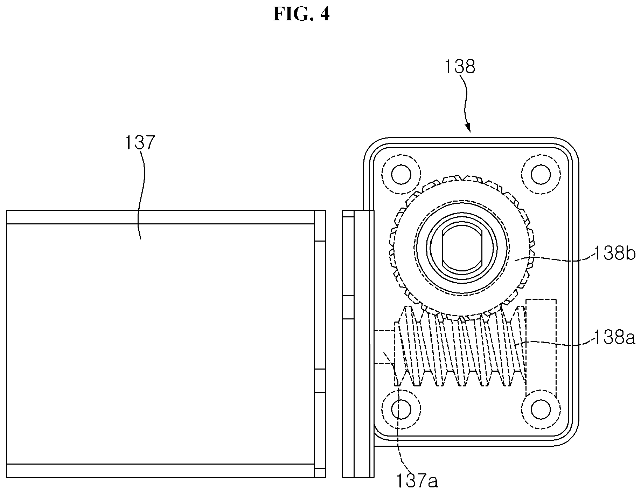

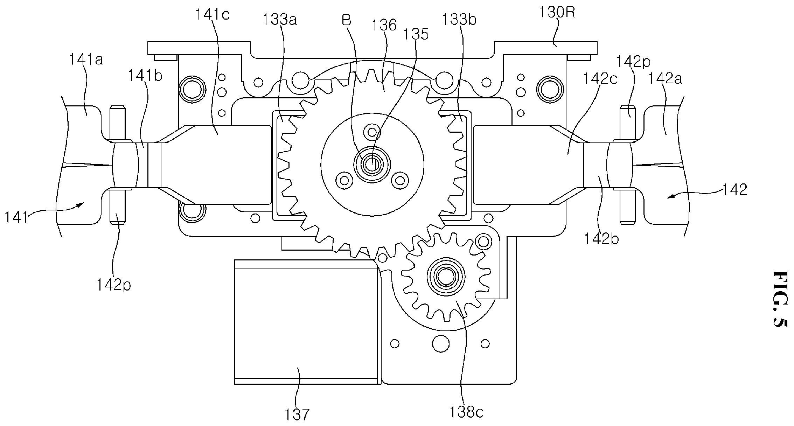

Referring to FIGS. 4 and 5, a first gear 138a may be fixed to the rotational shaft 137a of the motor 137 and may rotate together with the rotational shaft 137a of the motor 137. For example, the first gear 138a may be a worm. A second gear 138b may be engaged with the first gear 138a. For example, the second gear 138b may be a worm gear.

The first gear 138a and the second gear 138b may be positioned inside the gear box 138. The transmission gear 138c may be positioned outside the gear box 138. The transmission gear 138c may be fixed to the rotational shaft 137a of the second gear 138b and may rotate together with the second gear 138b. The transmission gear 138c may be engaged with the driving gear 136.

The lead screw 135 may be the rotational shaft of the driving gear 136. The driving gear 136 may be fixed to the lead screw 135. The driving gear 136 may be pin-coupled to the lead screw 135.

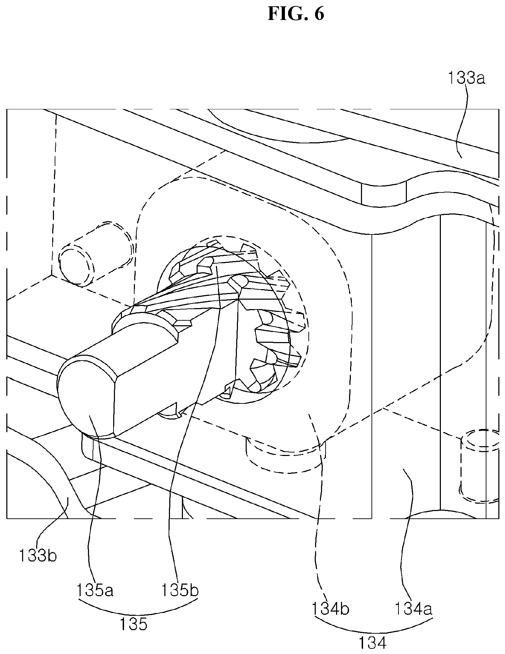

Referring to FIG. 6, the lead screw 135 may include a shaft body 135a and a screw 135b. The shaft body 135a may be an elongated cylinder, and the screw 135b may be formed on the outer circumferential surface of the shaft body 135a. The moving block 134 may include a moving body 134a and a sliding block 134b. For example, the moving body 134a may be made of metal, and the sliding block 134b may be made of synthetic resin. The sliding block 134b may be positioned inside the moving body 134a. The sliding block 134b may be screw-coupled with the lead screw 135.

The lead screw 135 may be inserted into the sliding block 134b. As the lead screw 135 rotates, the sliding block 134b may move in the lead screw 135. A gap may be formed between the inner circumferential surface of the sliding block 134b and the screw 135b of the lead screw 135. Accordingly, the moving block 134 may be prevented from being caught or locked while moving on the lead screw 135.

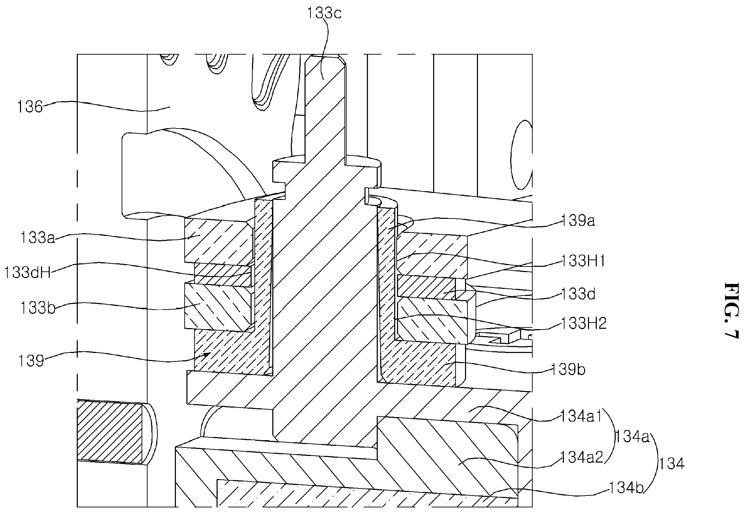

Referring to FIG. 7, the moving body 134a may include an outer part 134a1 and an inner part 134a2. The outer part 134a1 may form an outer surface of the moving body 134a. The inner part 134a2 may be coupled to the inner side of the outer part 134a1. For example, the outer part 134a1 may be a U-shaped metal plate, and the inner part 134a2 may be a metal shell having an internal receiving space. The sliding block 134b may be coupled to the inner side of the inner part 134a2.

The pivot pin 133c may be extended by protruding from the outer part 134a1 of the moving body 134a. The first frame 133a and the second frame 133b of the flip frame 133 may include holes 133H1, 133H2. The pivot pin 133c may be inserted into the hole 133H2 of the second frame 133b and the hole 133H1 of the first frame 133a. A disk 133d may be positioned between the first frame 133a and the second frame 133b, and the pivot pin 133c may be inserted into the hole 133dH of the disk 133d. For example, the disk 133d may be formed of a material having high durability and low friction.

An intermediate member 139 may be positioned between the moving body 134a and the pivot pin 133c and the flip frame 133. The intermediate member 139 may cover the upper surface of the moving body 134a and the outer surface of the pivot pin 133c. The intermediate member 139 may be referred to as a low-friction member 139 or a lubricating member 139. In addition, the intermediate member 139 may be referred to as a skin member 139.

The intermediate member 139 may include a body portion 139a and a flange portion 139b. The body portion 139a may have a cylindrical shape. The pivot pin 133c may be inserted into the body portion 139a. The body portion 139a may be in contact with the outer surface of the pivot pin 133c, and the flange portion 139b may be in contact with the upper surface of the moving body 134a. The intermediate member 139 may be a synthetic resin having low friction. The intermediate member 139 may be a low-friction material. For example, the intermediate member 139 may be a POM acetal homopolymer material. The first frame 133a and the second frame 133b of the flip frame 133 may be in contact with or rub against the intermediate member 139 and move around the pivot pin 133c.

The intermediate member 139 may fill a gap between the hole 133H1 of the first frame 133a of the flip frame 133 and the pivot pin 133c. The intermediate member 139 may fill a gap between the hole 133H2 of the second frame 133b of the flip frame 133 and the pivot pin 133c. The second frame 133b of the flip frame 133 may be placed on the intermediate member 139. Accordingly, the pivot pin 133c may transmit force to the flip frame 133 without noise or vibration.

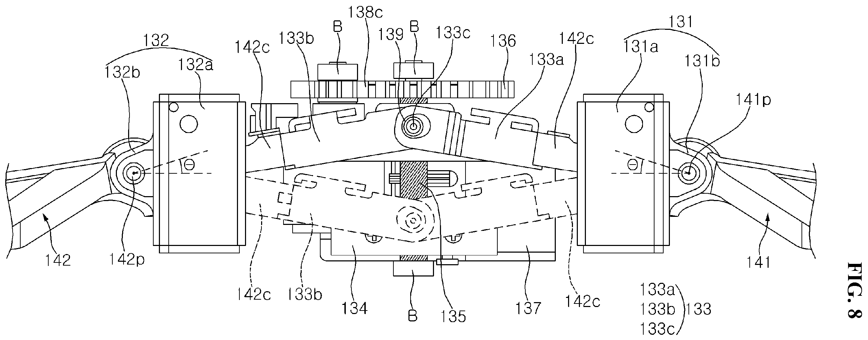

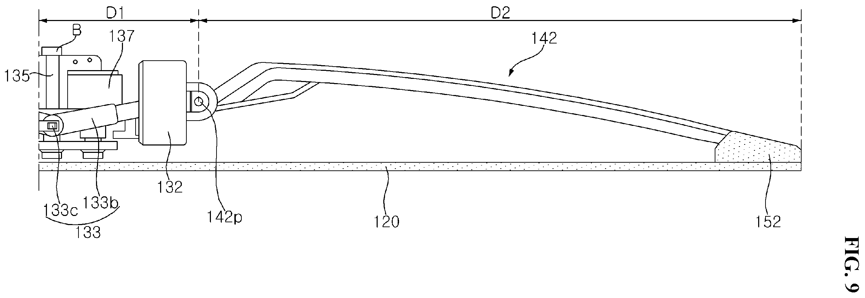

Referring to FIGS. 8 and 9, when the lead screw 135 rotates, the moving block 134 and the flip frame 133 may move in the lead screw 135. The flip frame 133 may reciprocate in the length direction of the lead screw 135. The movement of the flip frame 133 may pivot the first wing 141 and/or the second wing 142 about the pivot shaft 141P, 142P.

The first distance D1 from the pivot pin 133c to the pivot shaft 141P, 142P may be smaller than the second distance D2 from the pivot shaft 141P, 142P to the sliding mount 151, 152. For example, the first distance D1 may be 1/4 of the second distance D1. The lever 141c, 142c of the wing 141, 142 may be fixed to the flip frame 133, and the driving force of the moving block 134 that moves on the lead screw 135 while the flip frame 133 moves together with the pivot pin 133c when the pivot pin 133c moves may be efficiently transmitted to the lever 141c, 142c of the wing 141, 142 through the flip frame 133.

In addition, the first distance D1 increases as the lever 141c, 142c of the wing 141, 142 is fixed to and moves together with the flip frame 133, so that the wing 141, 142 can be driven with a small force. Accordingly, the power transmission efficiency of the driving unit 130 increases, and the power consumption of the motor 137 may be reduced.

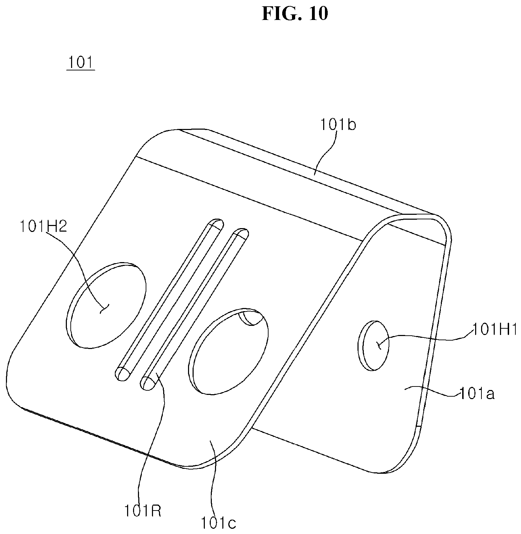

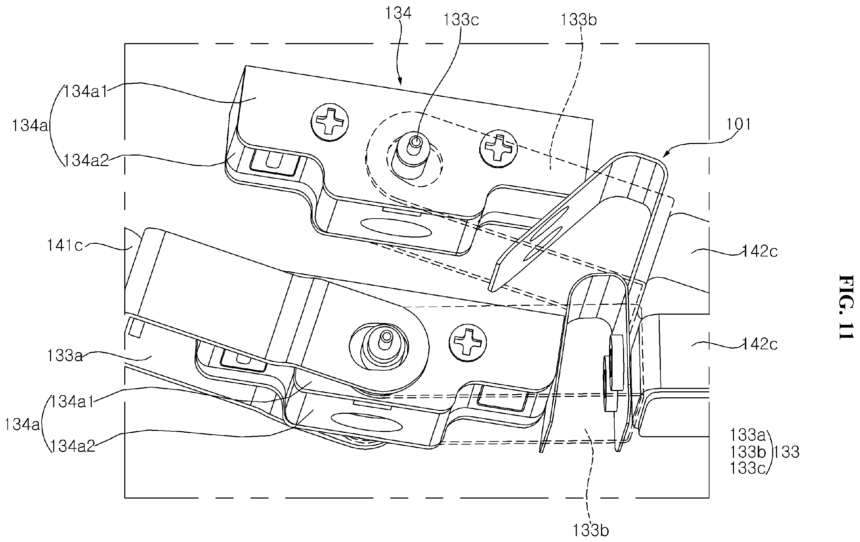

Referring to FIGS. 10 and 11, the elastic member 101 may include a first part 101a, a second part 101b, and a third part 101c. The elastic member 101 may be referred to as a first elastic member 101 or a clip 101. The first part 101a may be a plate. The second part 101b may be bent and extended from the first part 101a. The third part 101c may be bent and extended from the second part 101b. The third part 101c may face the first part 101a. A second angle formed by the second part 101b and the third part 101c may be greater than a first angle formed by the first part 101a and the second part 101b. In the extending direction, the length of the third part 101c may be greater than the length of the first part 101a. The elastic member 101 may be a metal plate and may have elasticity. For example, the elastic member 101 may be a plate spring.

A coupling hole 101H1 may be formed in the first part 101a. There may be a plurality of coupling holes 101H1. The support rib 101R may be formed in the third part 101c. The support rib 101R may be extended long in the extending direction of the third part 101c. There may be a plurality of support ribs 101R. The support rib 101R may protrude from the outer surface of the third part 101c. The plurality of support ribs 101R may be parallel to each other.

The elastic member 101 may be inserted into between the moving block 134 and the lever 141c, 142c of the wing 141, 142. The first part 101a of the elastic member 101 may be fixed to the lever 141c, 142c of the wing 141, 142. For example, the first part 101a of the elastic member 101 may be fastened to the lever 141c, 142c of the wing 141, 142 by a screw. The third part 101c of the elastic member 101 may support the moving block 134. The third part 101c of the elastic member 101 may come into contact with the side surface of the moving block 134. The third part 101c of the elastic member 101 may be in contact with the outer part 134a1 and/or the inner part 134a2 of the moving body 134a. The outer part 134a1 and/or the inner part 134a2 of the moving body 134a that is in contact with the third part 101c of the elastic member 101 may be rounded. The support rib 101R formed in the third part 101c of the elastic member 101 may be in contact with the inner part 134a2 of the moving block 134.

There may be a plurality of elastic members 101. Each of the plurality of elastic members 101 may be inserted into between the moving block 134 and the lever 141c of the first wing 141 and between the moving block 134 and the lever 142c of the second wing 142.

In a mechanism in which the flip frame 133 flips or pivots around the pivot pin 133c, a gap may occur between the pivot pin 133c of the moving block 134 and the hole 133H1, 133H2 (see FIG. 7) of the flip frame 133. The elastic member 101 may push the moving block 134 in one direction. The elastic member 101 may push the moving block 134 in one direction so that the pivot pin 133c of the moving block 134 may be pressed against one side of the hole 133H1, 133H2 of the flip frame 133.

Accordingly, the moving block 134 may transmit force to the flip frame 133 in all sections in which the moving block 134 moves on the lead screw 135. In the mechanism in which the moving block 134 transmits force to the flip frame 133, the gap between components may cause the bending of the display panel 110 to temporarily stop. According to the present embodiment, the bending of the display panel 110 may be implemented continuously.

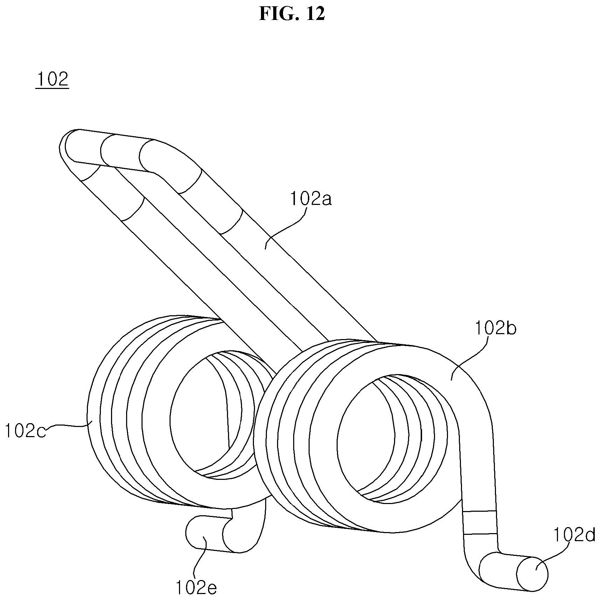

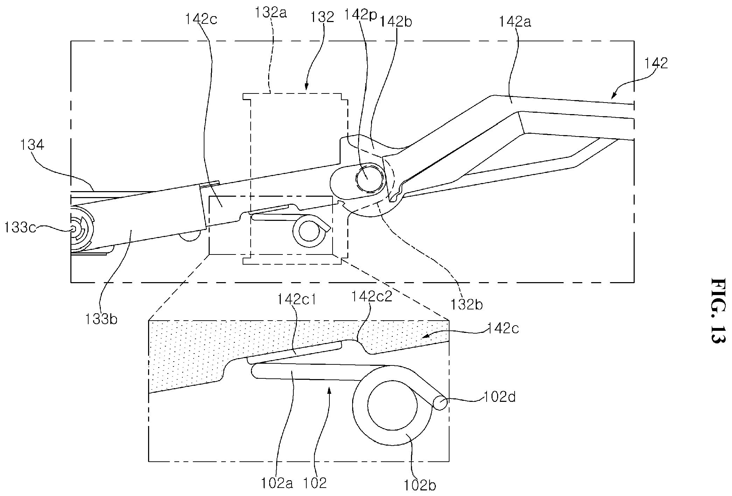

Referring to FIGS. 12 and 13, the elastic member 102 may include a lever portion 102a, a support portion 102d, 102e, and a coil portion 102b, 102c. The elastic member 102 may be formed of a wire. The elastic member 102 may be referred to as a second elastic member 102.

The lever portion 102a may be a wire bent in a U shape. The coil portion 102b, 102c may be connected to the lever portion 102a. There may be a plurality of coil portions 102b, 102c. A first coil portion 102b may be connected to one end of the lever portion 102a, and a second coil portion 102c may be connected to the other end of the lever portion 102a. There may be a plurality of support portions 102d, 102e. A first support portion 102d may form the distal end of the first coil portion 102b, and a second support portion 102e may form the distal end of the second coil portion 102c.

When the support portion 102d, 102e is fixed, the lever portion 102a may rotate or pivot around the coil portions 102b, 102c. The coil portion 102b, 102c may provide elastic force to the lever portion 102a.

The elastic member 102 may be installed in the wing bracket 132. The support portion 102d, 102e of the elastic member 102 may be fixed to the bracket frame 132a of the wing bracket 132. The lever portion 102a of the elastic member 102 may be supported by the lever 142c of the wing 142.

The wing 142 may include a support groove 142c2 and a friction pad 142c1. The support groove 142c2 may be formed at a position corresponding to a portion of the length of the lever portion 102a of the elastic member 102. The friction pad 142c1 may be formed in the support groove 142c2. The friction pad 142c1 may be formed by protruding from the support groove 142c2, and may have a smoothly polished surface.

When the wing 141, 142 is pivotally connected to the wing bracket 131, 132, a gap may be formed between the pivot shaft 141p, 142p of the wing 141, 142 and the wing holder 131b, 132b of the wing bracket 131, 132. In a mechanism in which the moving block 134 transmits force to the flip frame 133 so that the wing 141, 142 bends the display panel 110, the gap between components may cause the bending of the display panel 110 to temporarily stop. The wing 141, 142 may receive force from the elastic member 102 toward the front of the display device 100. Accordingly, the bending of the display panel 110 may be continuously implemented. In addition, the power consumption of the motor 137 for bending the display panel 110 may be reduced.

In addition, by the screw connection of the sliding block 134b (see FIG. 6) and the lead screw 135, a gap may be formed for the sliding block 134b to move in the lead screw 135. The elastic member 102 pushes the wing 141, 142 to press the sliding block 134b in one direction of the lead screw 135, so that the bending of the display panel 110 may be continuously implemented. In addition, when the rotational force of the motor 137 and the lead screw 135 is released while the display panel 110 is flat, the flatness of the display panel 110 may be changed. According to the present embodiment, the display panel 110 may be maintained in a flat state and/or in a state where the display panel 110 is curved at a certain curvature.

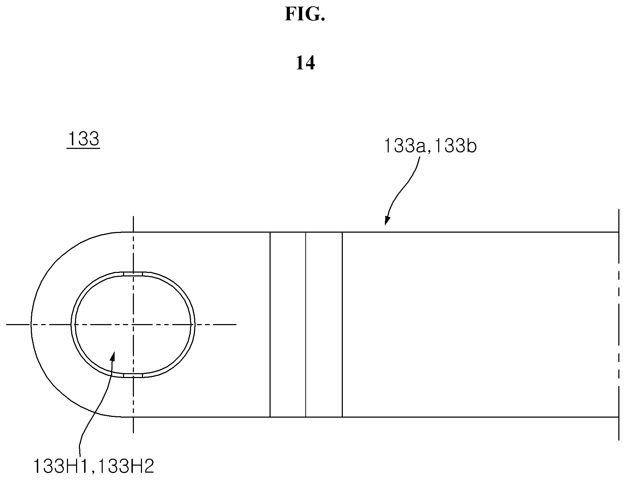

Referring to FIG. 14, the flip frame 133 may have a hole 133H1, 133H2. The hole 133H1, 133H2 may be positioned adjacent to the distal end of the first frame 133a and/or the second frame 133b of the flip frame 133. The hole 133H1, 133H2 may be a long hole 133H1, 133H2 having a long axis and a short axis. The long axis of the hole 133H1, 133H2 may be parallel to the length direction of the frame 133. The short axis of the hole 133H1, 133H2 may intersect with the length direction of the frame 133.

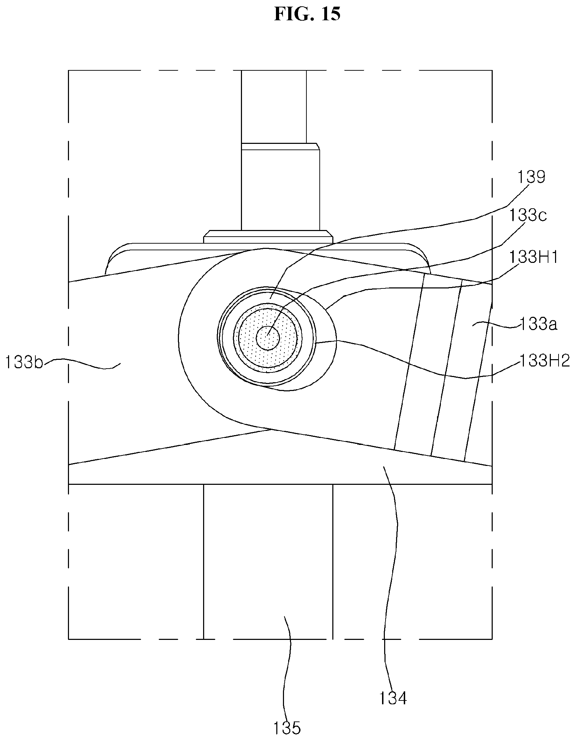

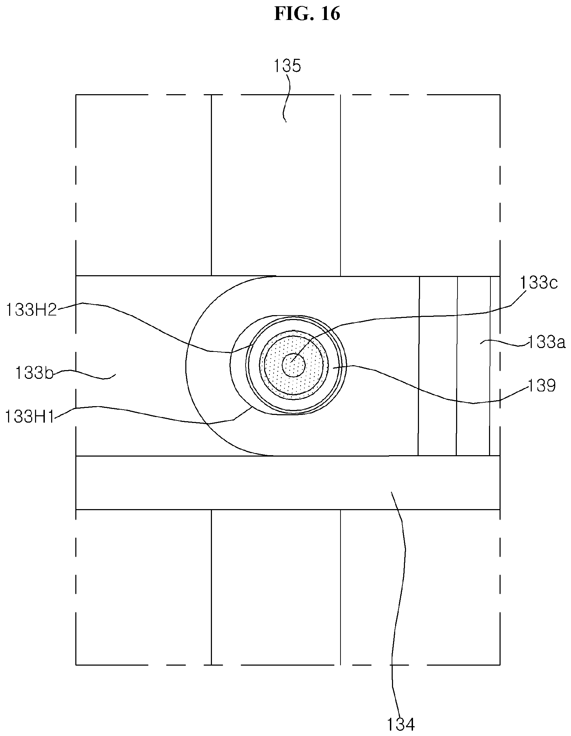

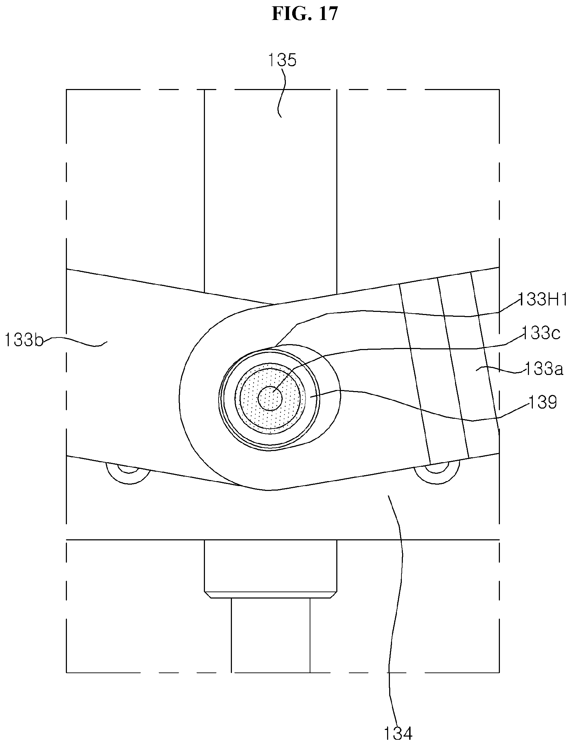

Referring to FIGS. 15 to 17, the pivot pin 133c is inserted into the hole 133H1, 133H2 of the flip frame 133, and the moving block 134 may move in the lead screw 135. As the moving block 134 moves on the lead screw 135, the display panel 110 may be curved (see FIG. 16) from a flat state (see FIG. 15) and may be curved at a certain curvature (see FIG. 17).

When the display panel 110 starts to be curved from a flat state, or when the display panel 110 is curved at a certain curvature and then becomes flat while the radius of curvature becomes larger than a certain radius of curvature, the moving direction of the moving block 134 may change. That is, at the starting and ending points of the moving block 134, the display panel 110 may be flat or curved with a certain curvature.

When the moving block changes the moving direction at the starting and/or ending points, the direction in which the pivot pin 133c applies force to the hole 133H1, 133H2 of the flip frame 133 may change. As the direction in which the pivot pin 133c applies force to the hole 133H1, 133H2 of the flip frame 133 changes, the continuity in the change in the curvature of the display panel 110 may be broken due to the gap between the pivot pin 133c and the hole 133H1, 133H2 of the flip frame 133.

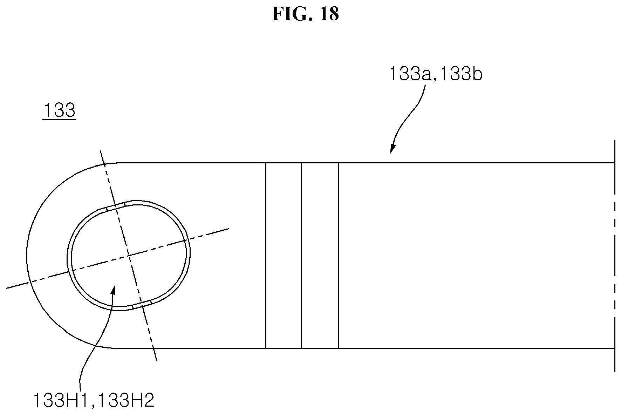

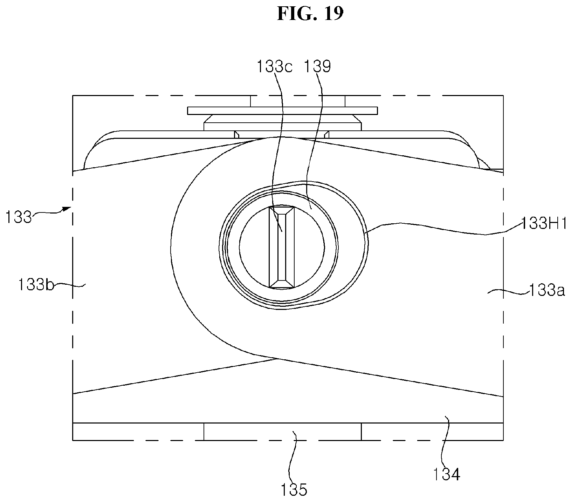

Referring to FIGS. 18 and 19, the long axis of the hole 133H1, 133H2 of the flip frame 133 may form an angle (theta) with respect to the length direction of the flip frame 133. For example, the angle (theta) may correspond to the angle (theta) formed by the starting point or the end point of the moving block 134 based on a line connecting the pivot shaft 141p, 142p of the wing 141, 142 (see FIG. 8) with the pivot shaft 141p, 142p of the wing 141, 142 as the center.

As the hole 133H1, 133H2 of the flip frame 133 approaches the starting point or end point of the moving block 134, the long axis of the hole 133H1, 133H2 may become parallel to a reference line connecting the pivot shaft 141p, 142p of the wings 141 and 142 of the moving block 134. When the pivot pin 133c changes its moving direction, the moving direction of the pivot pin 133c may be aligned with the short axis direction of the hole 133H1, 133H2 of the flip frame 133.

When the pivot pin 133c changes its the moving direction, if the moving direction of the pivot pin 133c is aligned with the short axis of the hole 133H1, 133H2 of the flip frame 133, the gap formed between the pivot pin 133c and the hole 133H1, 133H2 of the flip frame 133 may be minimized. Accordingly, the pivot pin 133c may continuously transmit power or force to the flip frame 133 according to the movement and/or direction change of the moving block 134.

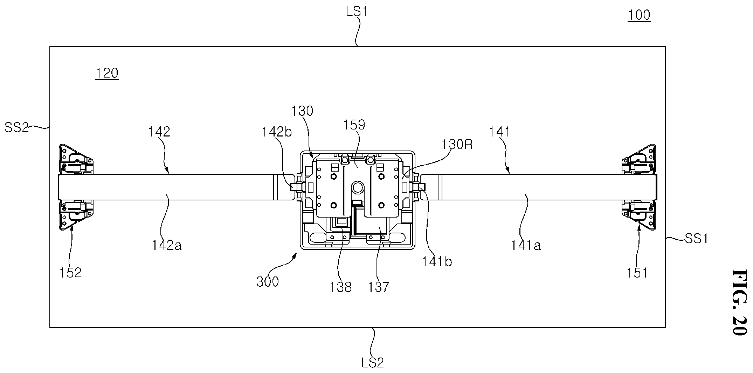

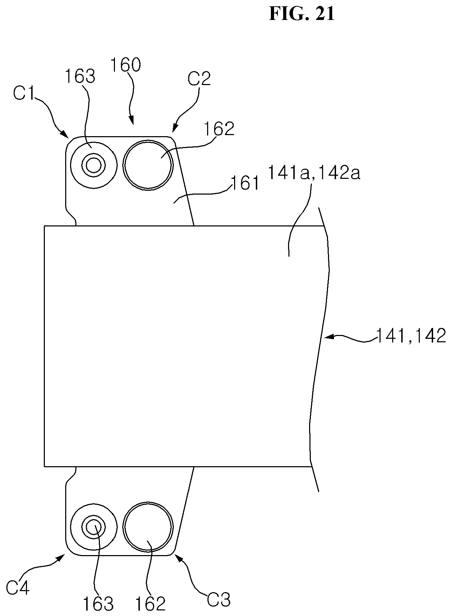

Referring to FIGS. 20 and 21, the first sliding mount 151 may be fixed to the rear surface of the plate 120 while being adjacent to the first short side SS1 of the plate 120. The second sliding mount 152 may be fixed to the rear surface of the plate 120 while being adjacent to the second short side SS2 of the plate 120.

The driving module 130 may be positioned between the first sliding mount 151 and the second sliding mount 152, and may be coupled to the rear surface of the plate 120. The first wing 141 may have one end pivotally connected to the driving module 130 and the other end coupled to the first sliding mount 151. The other end of the first wing 141 may be moved on the first sliding mount 151. The second wing 142 may have one end pivotally connected to the driving module 130 and the other end coupled to the second sliding mount 152. The other end of the second wing 142 may be moved on the second sliding mount 152.

The PCB plate 159 may be positioned at the rear of the driving module 130. The PCB plate 159 may be fixed to the rear bracket 130R (see FIG. 2) of the driving module 130. PCB substrates may be coupled to the PCB plate 159.

The side cover 300 may form a wall around the side surfaces of the driving module 130. For example, the side cover 300 may be a square frame. The back cover (not shown) may cover the driving module 130 and may be coupled to the side cover 300.

The slide bracket 160 may be coupled or fixed to the distal end of the wing 141, 142. The slide bracket 160 may include a body 161 in the shape of an elongated plate and a protrusion 162, 163 formed adjacent to both ends of the body 161. The protrusion 162, 163 may be referred to as a friction protrusion 162, 163 or a contact protrusion 162, 163. For example, the slide bracket 160 may be made of metal.

The body 161 may include a center part and a side part. The center part may face or overlap the wing 141, 142. The side part may be formed on one side or both sides of the center part and may be exposed to the outside of the wing 141, 142. The protrusion 162, 163 may be positioned on the side part of the body 161.

There may be a plurality of protrusions 162, 163. The plurality of protrusions 162, 163 may include a front protrusion 163 and a rear protrusion 162. The front protrusion 163 may be formed at a first corner C1 and/or a fourth corner C4 of the body 161. The front protrusion 163 may be protruded while being pressed toward the front of the body 161. The front protrusion 163 may have a dome or hemispherical shape. The rear protrusion 162 may be formed at a second corner C2 and/or a third corner C3 of the body 161. The rear protrusion 162 may be protruded while being pressed toward the rear of the body 161. The rear protrusion 162 may have a dome or hemispherical shape. The rear protrusion 162 may be adjacent to the front protrusion 163. The front protrusion 163 and the rear protrusion 162 may be sequentially arranged along the short side of the body 161. A first pair of front protrusion 163 and rear protrusion 162 may be opposite to a first pair of front protrusion 163 and rear protrusion 162 with respect to the wing 141, 142.

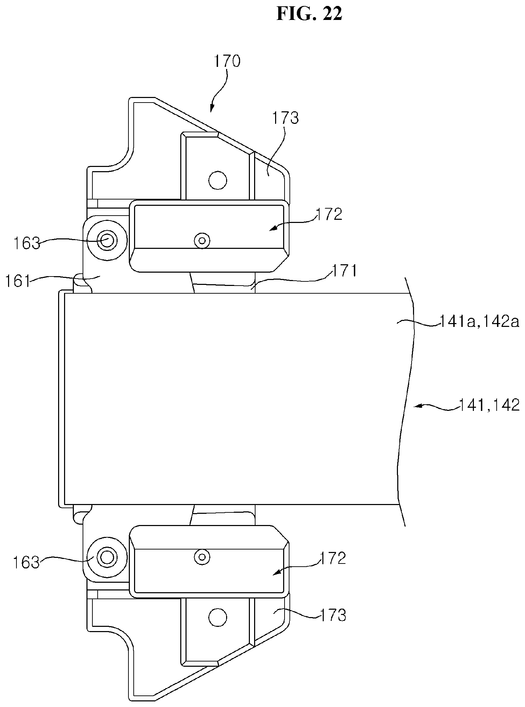

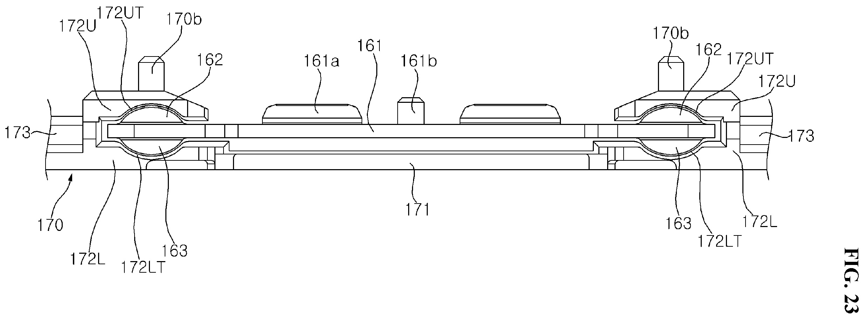

Referring to FIGS. 22 and 23, the slide bracket 160 may be coupled to the guide cover 170. The slide bracket 160 may be inserted into the guide cover 170 and may move in the guide cover 170. For example, the guide cover 170 may be a synthetic resin having low friction. The guide cover 170 may be a low-friction material. For example, the guide cover 170 may be a POM acetal homopolymer material.

The guide cover 170 may include a base 171, a side rail 172, and a fixed plate 173. The base 171 may face the slide bracket 160 in the shape of an elongated plate. The side rail 172 may be formed at both ends of the base 171. The side rail 172 may include a lower part 172L and an upper part 172U. The lower part 172L may extend from the base 171.

The lower part 172L may have a lower trench 172LT. The lower trench 172LT may be formed in the lower part 172L while the upper surface of the lower part 172L is largely recessed inward. For example, the lower trench 172LT may have a half-pipe shape. The front protrusion 163 of the slide bracket 160 may move in the lower trench 172LT. The radius of curvature of the front protrusion 163 may be smaller than the radius of curvature of the lower trench 172LT. Accordingly, the front protrusion 163 may come into point contact with the lower trench 172LT.

The upper part 172U may be spaced apart from the lower part 172L and may face the lower part 172L. A gap may be formed between the upper part 172U and the lower part 172L, and the slide bracket 160 may be inserted into the gap. The upper part 172U may form an upper trench 172UT. The upper trench 172UT may be formed in the upper part 172U as the lower surface of the upper part 172U is largely recessed inwardly. For example, the upper trench 172UT may be a half-pipe shape. The rear protrusion 162 of the slide bracket 160 may move in the upper trench 172UT. The radius of curvature of the rear protrusion 162 may be smaller than the radius of curvature of the upper trench 172UT. Accordingly, the rear protrusion 162 may come into point contact with the upper trench 172UT.

The slide bracket 160 and the guide cover 170 may be coupled to prevent the wing 141, 142 from being sagging due to its own weight.

The slide bracket 160 may include a coupling portion 161a for coupling with the wing 141, 142 and a pemnut 161b or a coupling protrusion 161b. The guide cover 170 may include a pemnut 170b or a coupling protrusion 170b for coupling with the sliding mount 151, 152.

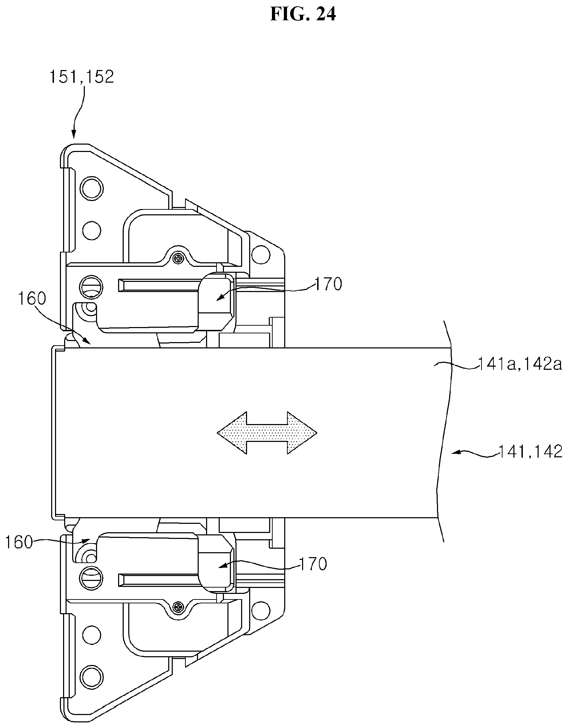

Referring to FIGS. 24 to 26, the slide bracket 160 may be coupled to the front surface of the wing blade 141a, 142b while being adjacent to the distal end of the wing 141, 142. The guide cover 170 may be fixed to the sliding mount 151, 152. The slide bracket 160 may be inserted into the guide cover 170 and may reciprocally move in the length direction of the wing 141, 142 in the guide cover 170.

When the display panel 110 is curved at a certain curvature and then becomes flat, the slide bracket 160 may move toward the short side SS1, SS2 of the plate 120 in the guide cover 170. The front protrusion 163 may move in the lower trench 172LT. The front protrusion 163 may move in the lower trench 172LT by contacting or gently rubbing against the surface of the lower trench 172LT. The rear protrusion 162 may move in the upper trench 172UT by contacting or gently rubbing against the surface of the upper trench 172UT.

When the display panel 110 is flat and then curved at a certain curvature, the slide bracket 160 may move from the short side SS1, SS2 of the plate 120 toward the driving module 130 in the guide cover 170. The front protrusion 163 may move in the lower trench 172LT. The front protrusion 163 may move in the lower trench 172LT by contacting or gently rubbing against the surface of the lower trench 172LT. The rear protrusion 162 may move in the upper trench 172UT by contacting or gently rubbing against the surface of the upper trench 172UT.

When the protrusion 162, 163 and the trench 172LT, 172UT come into point contact, friction is reduced, wear due to friction may be improved, and the structural durability of the mechanism may be improved as a lubricant is not necessary.

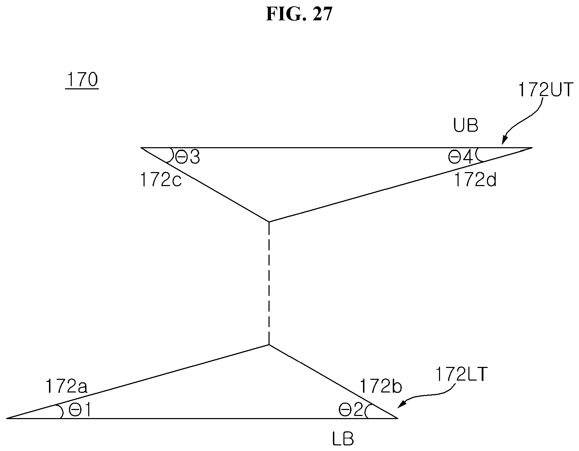

Referring to FIG. 27, the lower trench 172LT may include a first inclined surface 172a and a second inclined surface 172b, and the upper trench 172UT may include a third inclined surface 172c and a fourth inclined surface 172d. The first inclined surface 172a may form a first angle (theta 1) with respect to a base surface LB. The second inclined surface 172b may form a second angle (theta 2) with respect to the base surface LB. The second inclined surface 172b may be in contact with the first inclined surface 172a.

A third inclined surface 172c may form a third angle (theta 3) with respect to the base plane UB. A fourth inclined surface 172d may form a fourth angle (theta 4) with respect to the base plane UB. The fourth inclined surface 172d may be in contact with the third inclined surface 172c. The boundary between the third inclined surface 172c and the fourth inclined surface 172d may correspond to or be aligned with the boundary between the first inclined surface 172a and the second inclined surface 172b. For example, the boundary between the third inclined surface 172c and the fourth inclined surface 172d may be aligned on the same line in the vertical direction as the boundary between the first inclined surface 172a and the second inclined surface 172b.

The second angle (theta 2) may be greater than the first angle (theta 1). The third angle (theta 3) may be greater than the fourth angle (theta 4). The length of the first inclined surface 172a may be greater than the length of the second inclined surface 172b. The length of the fourth inclined surface 172d may be greater than the length of the third inclined surface 172c. The third inclined surface 172c may face the first inclined surface 172a, and the second inclined surface 172b may face the fourth inclined surface 172d.

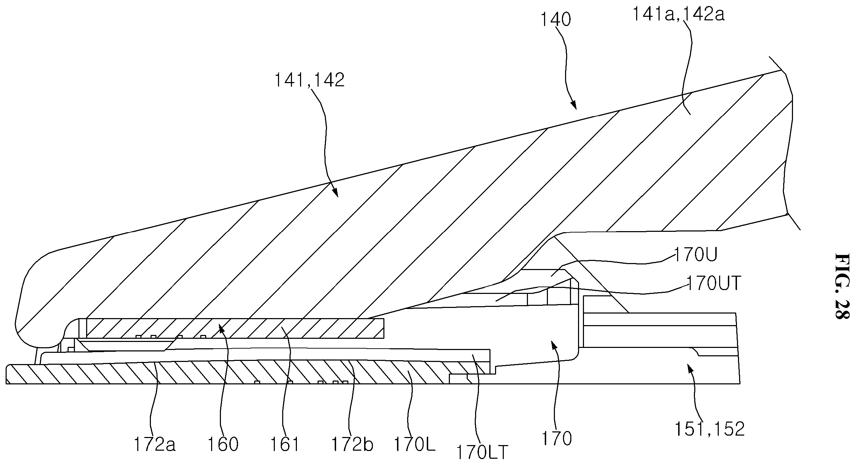

Referring to FIG. 28 together with FIG. 24, the slide bracket 160 to which the wing 140 is coupled may be inserted or coupled to the guide cover 170 and the sliding mount 151, 152.

When the wing 151, 152 pivots and moves around the driving module 130, the slide bracket 160 may move in the length direction of the wing 140 from the guide cover 170.

When the wing 140 curves the flat display panel 110, the slide bracket 160 may move from the first inclined surface 172a to the second inclined surface 172b. When the wing 140 flattens the display panel 110 curved at a certain curvature, the slide bracket 160 may move from the second inclined surface 172b to the first inclined surface 172a.

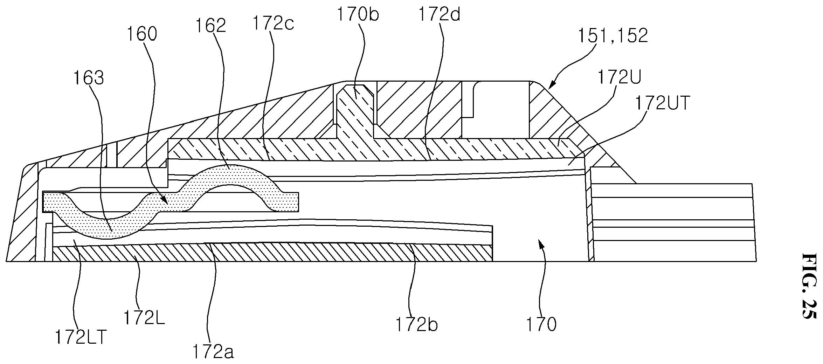

Referring to FIG. 25 together, while the wing 140 curves the flat display panel 110, the front protrusion 163 of the slide bracket 160 may slide while being in contact with the lower trench 172LT. The front protrusion 163 may press against the lower trench 172LT and cause friction. The rear protrusion 162 may slide while being in contact with the upper trench 172UT or may slide while being supported by the upper trench 172UT.

While the wing 140 flattens the display panel 110 curved at a certain curvature, the front protrusion 163 of the slide bracket 160 may slide while being in contact with the lower trench 172LT or may slide while being supported by the lower trench 172LT. The rear protrusion 162 may slide while being in contact with the upper trench 172UT or may slide while being supported by the upper trench 172UT.

Accordingly, when the display panel 110 is curved, the curved curvature may become a constant curvature at a certain curvature or be close to a constant curvature.

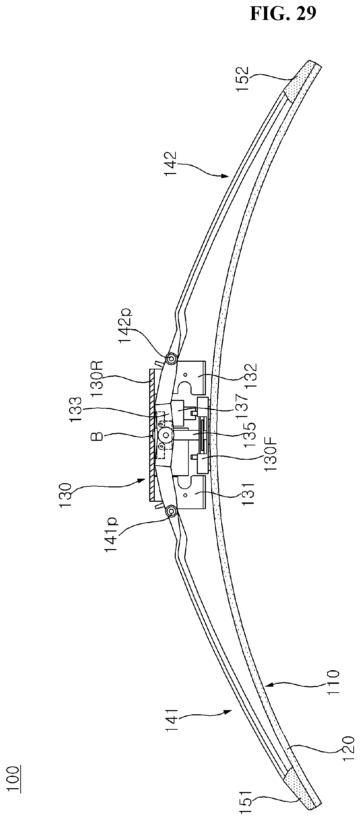

Referring to FIG. 29 together with FIG. 2, when the lead screw 135 rotates by the rotational force provided by the motor 137, the flip frame 133 moves in the length direction of the lead screw 135 to pivot the wing 140 around the pivot shaft 141P, 142P.

When the wing 140 is pivoted, the slide bracket 160 moves in the sliding mount 151, 152 (see FIG. 24) and the guide cover 170, and pushes the both sides of the display panel 110 and the plate 120, thereby allowing the display panel 110 to be curved.

When the lead screw 135 rotates in the reverse direction, the flip frame 133 moves in the reverse direction of the lead screw 135, thereby allowing the wing 140 to pivot in the opposite direction around the pivot shaft 141P, 142P.

When the wing 140 is pivoted in the opposite direction, the slide bracket 160 moves in the sliding mount 151, 152 and the guide cover 170, and allows the display panel 110 to be flattened while pulling the both sides of the display panel 110 and the plate 120.

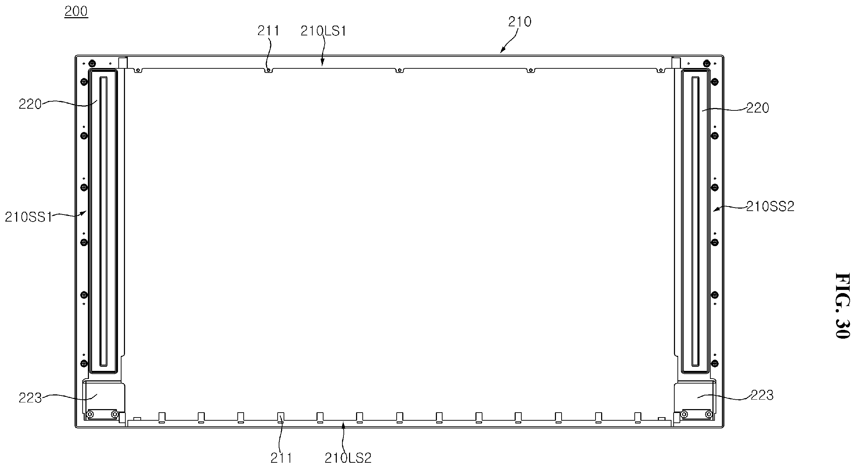

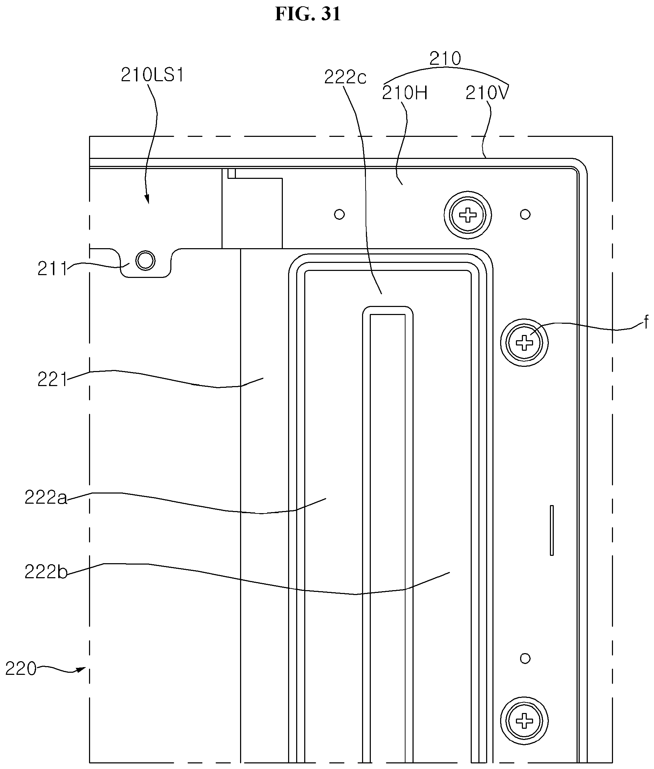

Referring to FIGS. 30 and 31, the plate 120 (see FIG. 2) may be referred to as a bottom cover 120, 200 or a rear cover 120, 200. The bottom cover 200 may include a main frame 210 and a side bracket 220.

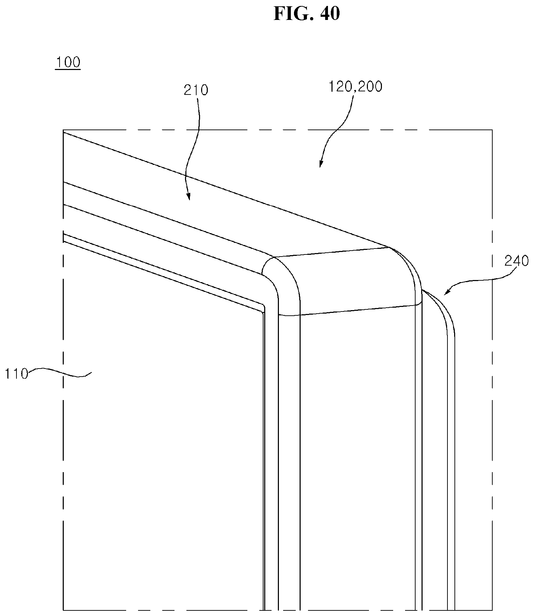

The main frame 210 may form a rectangular border having an open center. For example, the main frame 210 may be formed of a synthetic resin. The main frame 210 may include a horizontal portion 210H and a vertical portion 210V. The horizontal portion 210H may be extended along the sides LS1, LS2, SS1, SS2 of the display panel 110 in a plane direction of the display panel 110 (see FIG. 1). The vertical portion 210V may extend in a direction intersecting with the extension direction of the horizontal portion 210H, and may be formed at the edge of the horizontal portion 210H. The main frame 210 may include a first long side part 210LS1, a second long side part 210LS2, a first short side part 210SS1, and a second short side part 210SS2. The first long side part 210LS1, the second long side part 210LS2, the first short side part 210SS1, and the second short side part 210SS2 may be formed as one body (see FIG. 40). The main frame 210 may be flexible in the direction in which the display panel 110 is curved.

The side bracket 220 may be in the shape of a long extended plate and may be pressed to form a bend. There may be a plurality of side brackets 220. The side bracket 220 may include a flat portion 221, a rib part 222a, 222b, 222c, and a support part 223. The rib part 222a, 222b, 222c may protrude from the flat portion 221 when the flat portion 221 is pressed in a forward direction. The rib part 222a, 222b, 222c may include a first rib 222a, a second rib 222b, and a connecting portion 222c. The first rib 222a may be parallel to the second rib 222b, and the connecting portion 222c may connect the distal ends of the first rib 222a and the second rib 222b. The support part 223 may be pressed in a rearward direction from the flat portion 221 and may protrude from the flat portion 221. The support part 223 may be positioned at a corner C3, C4 formed between the short side SS1, SS2 and long side LS1, LS2 of the main frame 210. The side bracket 220 may be fixed to the main frame 210 by a fastening member f. For example, the fastening member f may be a screw.

The first side bracket 220 may be arranged parallel to the first short side part 210SS1 of the main frame 210, and the second side bracket 220 may be arranged parallel to the second short side part 210SS2 of the main frame 210. The side bracket 220 may be coupled to the main frame 210. The first side bracket 220 may be coupled to the first short side part 210SS1, and the second side bracket 220 may be coupled to the second short side part 210SS2. Accordingly, rigidity may be provided to the main frame 210.

A coupling protrusion 211 may be formed on the first long side part 210LS1 and/or the second long side part 210LS2 of the main frame 210. The coupling protrusion 211 may be referred to as a coupling portion 211. There may be a plurality of coupling protrusions 211. The coupling protrusion 211 may be opposite to the vertical portion 210V with respect to the horizontal portion 210H. A first plurality of coupling protrusions 211 may be formed on the edge of the first long side part 210LS1. A second plurality of coupling protrusions 211 may be formed on the edge of the second long side part 210LS2. The number of the second plurality of coupling protrusions 211 may be greater than the number of the first plurality of coupling protrusions 211.

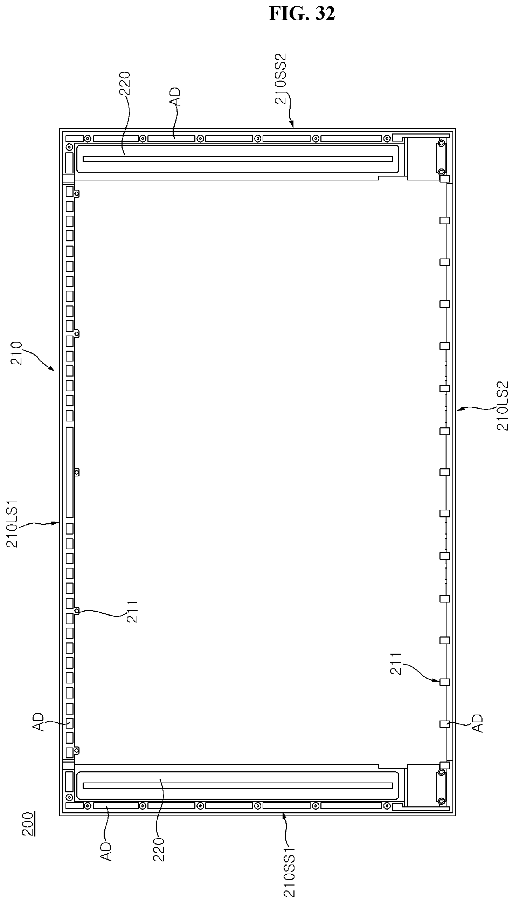

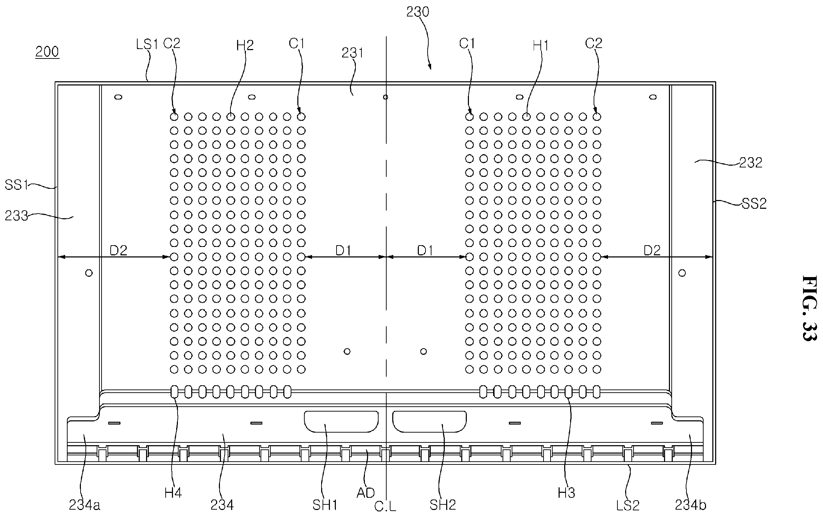

Referring to FIGS. 32 and 33, the adhesive member AD may be fixed to the main frame 210. For example, the adhesive member AD may be a double-sided tape. For another example, the adhesive member AD may be a single-sided tape. The adhesive member AD may have elasticity. For example, the adhesive member AD may be a sponge.

The adhesive member AD may be arranged at a constant interval on the horizontal portion 210H (see FIG. 31) of the first long side part 210LS1 of the main frame 210. The adhesive member AD may be fixed on the coupling protrusion 211 in correspondence with the coupling protrusion 211 of the second long side part 210LS2 of the main frame 210. The adhesive member AD may be arranged at a constant interval on the horizontal portion 210H (see FIG. 31) of the first short side part 210SS1 and/or the second short side part 210SS2.

The inner plate 230 may be coupled to the main frame 210 while covering the main frame 210 and/or the side bracket 220. The inner plate 230 may be fixed to the adhesive member AD.

The inner plate 230 may include a flat portion 231, a side portion 232, 233, and a storage portion 234. For example, the inner plate 230 may include metal and may be a thin plate.

The side portion 232, 233 may be protruded while being pressed forward from the flat portion 231. The side portion 232, 233 may be protruded while forming a step that is raised from the flat portion 231. The side portion 232, 233 may cover the side bracket 220.

The storage portion 234 may be recessed while being pressed rearward from the flat portion 231. The storage portion 234 may be recessed while forming a step that is lowered from the flat portion 231. The storage portion 234 may form a plurality of steps from the flat portion 231. The boundary where the step between the flat portion 231 and the storage portion 234 is formed may be referee to as a boundary.

A cable hole SH1, SH2 may be formed in the storage portion 234. The cable hole SH1, SH2 may be formed by penetrating the storage portion 234. A first cable hole SH1 may be arranged long at a first distance D1 from the left side of the inner plate 231. A second cable hole SH2 may be arranged long at a first distance D1 from the right side of the inner plate 230.

A plurality of holes H1, H2, H3, H4 may be formed in the flat portion 231 of the inner plate 230. For example, the shape of the hole H1, H2, H3, H4 may be circular or oval. The plurality of holes H1, H2 may form rows and columns in the up-down direction of the inner plate 230. The number of columns formed by the plurality of holes H1, H2 may be smaller than the number of rows. For example, the number of columns of the plurality of holes H1, H2 may be 10. For another example, the number of rows of the plurality of holes H1, H2 may be 19. For example, the plurality of holes H1, H2 may be circular, and the respective spacing of the plurality of holes H1,H2 may be equal to each other.

The plurality of holes H3, H4 may be positioned at a boundary forming a step between the flat portion 231 and the storage portion 234. For example, the plurality of holes H3, H4 may be oblong or oval. The long shaft of the hole H3, H4 may be aligned in the up-down direction. The number of holes H3, H4 positioned at the boundary may be smaller than the number of rows of holes H1, H2 positioned at the flat portion 231.

The first distance D1 from the center line CL of the inner plate 230 to a first outermost row C1 of the plurality of holes H1, H2 may be smaller than the second distance D2 from the first short side SS1 and/or the second short side SS2 of the inner plate 230 to a second outermost row C2 of the plurality of holes H1, H2.

Accordingly, when the inner plate 230 is curved, a constant curvature may be achieved.

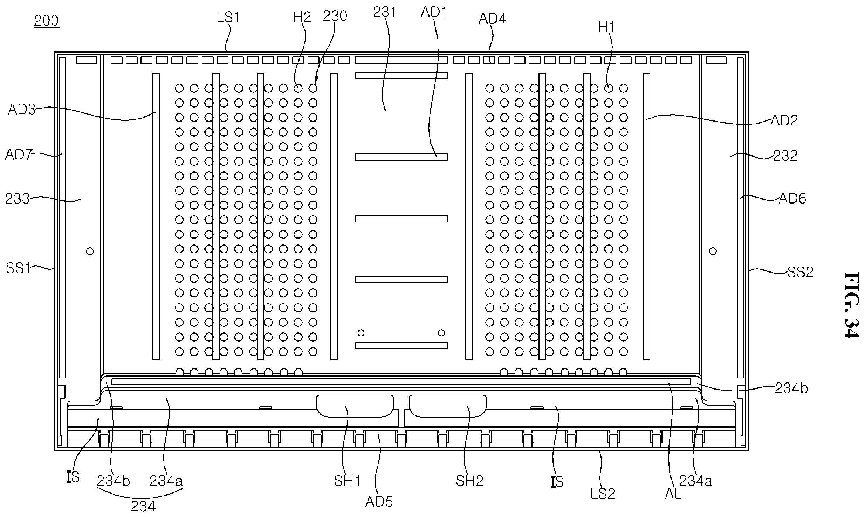

Referring to FIG. 34, the first adhesive member AD1 may be fixed to the central area of the inner plate 230. A first adhesive member AD1 may be extended in the left-right direction and may be fixed to the central area of the inner plate 230. A plurality of first adhesive members AD1 may be spaced apart from each other in the up-down direction and adhered to the inner plate 230. For example, the first adhesive member AD1 may be a single-sided tape. The central area of the inner plate 230 and the first adhesive member AD1 may support the central portion of the display panel 110 (see FIG. 29). As the display panel 110 is curved, the curvature may be formed by forming symmetry with respect to the central portion of the display panel 110.

A second adhesive member AD2 may be positioned between the first adhesive member AD1 and the second short side SS2 of the inner plate 230. The second adhesive member AD2 may be extended in the up-down direction and fixed to the inner plate 230. A plurality of second adhesive members AD2 may be adhered to the inner plate 230 while being spaced apart from each other in the left-right direction. For example, the second adhesive member AD2 may be a double-sided tape. As the display panel 110 is curved, the display panel 110 fixed to the second adhesive member AD2 may relatively slip with respect to the inner plate 230, and the second adhesive member AD2 may be deformed in the left-right direction to correspond to the relative slip between the display panel 110 and the inner plate 230.

A third adhesive member AD3 may be positioned between the first adhesive member AD1 and the first short side SS1 of the inner plate 230. The third adhesive member AD3 may be extended in the up-down direction and fixed to the inner plate 230. A plurality of third adhesive members AD3 may be adhered to the inner plate 230 while being spaced apart from each other in the left-right direction. For example, the third adhesive member AD3 may be a double-sided tape. As the display panel 110 is curved, the display panel 110 fixed to the third adhesive member AD3 may relatively slip with respect to the inner plate 230, and the third adhesive member AD3 may be deformed in the left-right direction to correspond to the relative slip of the display panel 110 and the inner plate 230. The length, width, and position of the third adhesive member AD3 may be symmetrical with respect to the first adhesive member AD1 and the second adhesive member AD2. Accordingly, the display panel 110 may be curved while forming left-right symmetry.

A fourth adhesive member AD4 may be arranged along the first long side LS1 of the inner plate 230. There may be a plurality of fourth adhesive members AD4, and the plurality of fourth adhesive members AD4 may form short-length sections. The plurality of fourth adhesive members AD4 may be sequentially arranged along the first long side LS1 of the inner plate 230, and may be spaced apart from each other. For example, the fourth adhesive member AD4 may be a double-sided tape. Accordingly, the display panel 110 may be curved to correspond to the slip between the display panel 110 and the inner plate 230, and to improve the coupling between the display panel 110 and the inner plate 230.

A fifth adhesive member AD5 may be arranged along the second long side LS2 of the inner plate 230. The fifth adhesive member AD5 may be arranged between the coupling portions 211 of the main frame 210, and may be fixed to the storage portion 234 of the inner plate 230. There may be a plurality of fifth adhesive members AD5, and the plurality of fifth adhesive members AD5 may form sections. The length of the fifth adhesive member AD5 may be greater than the length of the fourth adhesive member AD4. For example, the fifth adhesive member AD5 may be a double-sided tape.

A sixth adhesive member AD6 may be elongated and may be fixed to the inner plate 230 while being adjacent to the second short side SS2 of the inner plate 230 and parallel to the second short side SS2. A seventh adhesive member AD7 may be elongated and may be fixed to the inner plate 230 while being adjacent to the first short side SS1 of the inner plate 230 and parallel to the first short side SS1. For example, the sixth adhesive member AD6 and/or the seventh adhesive member AD7 may be a double-sided tape.

The insulating sheet IS may be fixed to the storage portion 234 of the inner plate 230. The insulating sheet IS may be extended along the second long side LS2 of the inner plate 230, and may be arranged parallel to the second long side LS2 of the inner plate 230 while being adjacent to the coupling portion 211 of the main frame 210 (see FIG. 30). The source PCB of the display panel 110 may be positioned in the storage portion 234, and the insulating sheet IS may prevent an electrical short between the inner plate 230 including metal and the source PCB.

The gasket AL may be fixed to the inner plate 230. For example, the gasket AL may include aluminum. The gasket AL may be extended long and may be positioned in the storage portion 234. The storage portion 234 may form a plurality of steps with respect to the flat portion 231. The storage portion 234 may have a first storage portion 234b that forms a step lowered from the flat portion 231 and a second storage portion 234a that forms a step lowered from the first storage portion 234b. The gasket AL may be arranged in the first storage portion 234b.

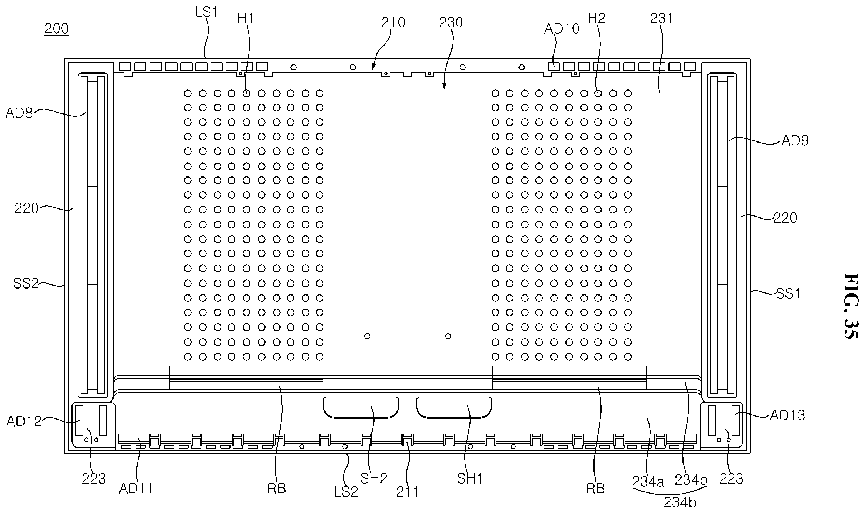

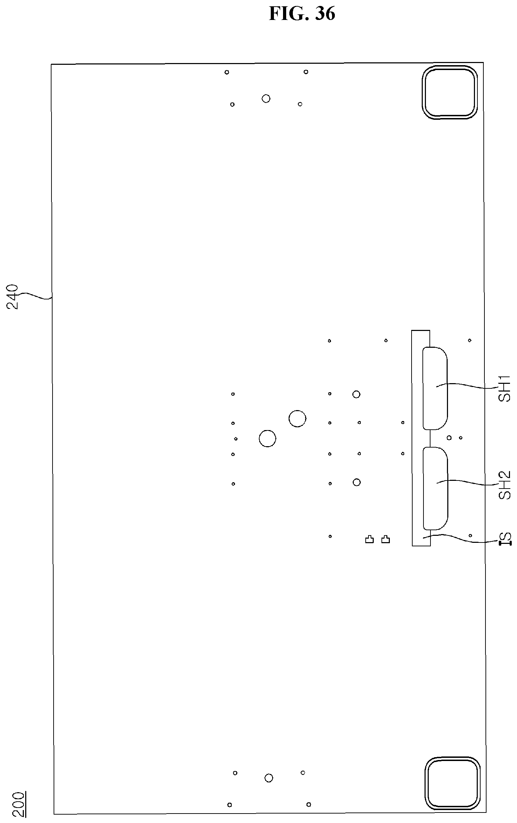

Referring to FIGS. 35 and 36, a buffer member RB may be fixed to the rear surface of the inner plate 230. The buffer member RB may be adhered to the rear surface of the flat portion 231 and/or the rear surface of the storage portion 234. For example, the buffer member RB may be a rubber, and may be adhered to the rear surface of the flat portion 231 and the rear surface of the first storage portion 234.

An eighth adhesive member AD8 and/or a ninth adhesive member AD9 may be fixed to the rear surface of the side bracket 220. The eighth adhesive member AD8 may be extended and arranged parallel to the second short side SS2 of the main frame 210. The ninth adhesive member AD9 may be extended and arranged parallel to the first short side SS1 of the main frame 210.

A tenth adhesive member AD10 may include a plurality of sections, and may be arranged sequentially along the first long side LS1 of the main frame 210. An eleventh adhesive member AD11 may be fixed to the rear surface of the storage portion 234 while being adjacent to the second long side LS2 of the main frame 210. There may be a plurality of eleventh adhesive members AD11, and the plurality of eleventh adhesive members AD11 may be positioned between the coupling portions 211 of the main frame 210.

A twelfth adhesive member AD12 and/or a thirteenth adhesive member AD13 may be fixed to the rear surface of the support part 223 of the side bracket 220.

The outer plate 240 may be fixed to the rear surface of the main frame 210 and/or the side bracket 220 at the rear of the inner plate 230. For example, the outer plate 240 may be a flexible thin metal plate. For another example, the outer plate 240 may be a flexible thin plastic.

The outer plate 240 may include a cable hole SH1, SH2. The cable hole SH1, SH2 may include a first cable hole SH1 and a second cable hole SH2. The first cable hole SH1 of the outer plate 240 may correspond to the first cable hole SH1 of the inner plate 230, and the second cable hole SH2 of the outer plate 240 may correspond to the second cable hole SH2 of the inner plate 230.

The insulating sheet IS may be fixed to the rear surface of the outer plate 240 while being adjacent to the cable hole SH1, SH2. The insulating sheet IS may be adhered to the rear surface of the outer plate 240 while covering the edge of the cable hole SH1, SH2.

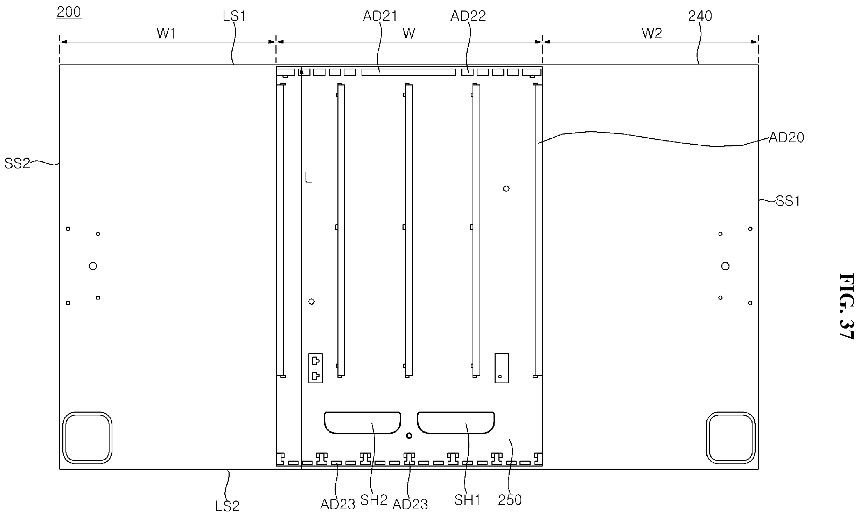

Referring to FIG. 37, the rear plate 250 may be coupled to the rear of the outer plate 240. The size of the rear plate 250 may be smaller than the size of the outer plate 240. For example, the rear plate 250 may be a thin metal plate. The thickness of the rear plate 250 may be smaller than the thickness of the outer plate 240. For example, the thickness of the outer plate 240 may be 0.5 millimeters, and the thickness of the rear plate 250 may be 0.4 millimeters.

The length L of the rear plate 250 may be equal to or slightly smaller than the length of the first short side SS1 and/or the second short side SS2 of the outer plate 240. The width W of the rear plate 250 may be smaller than the length of the first long side LS1 and/or the second long side LS2 of the outer plate 240. For example, the first distance W1 from the second short side SS2 of the outer plate 240 to the rear plate 250 may be equal to the second distance W2 from the first short side SS1 of the outer plate 240 to the rear plate 250. For another example, the width W of the rear plate 250 may be larger than the first distance W1 and/or the second distance W2.

The rear plate 250 may include a cable hole SH1, SH2. The cable hole SH1, SH2 of the rear plate 250 may correspond to the cable hole SH1, SH2 of the outer plate 240.

A twentieth adhesive member AD20 may be extended along the up-down direction of the rear plate 250. There may be a plurality of twentieth adhesive members AD20, and may be spaced apart from each other in the left-right direction of the rear plate 250.

A 21st adhesive member AD21 may be extended along the upper side of the rear plate 250, and may be fixed to the rear surface of the rear plate 250. There may be a plurality of 22nd adhesive members AD22, and the 22nd adhesive member AD22 may be a short section. The 22nd adhesive member AD22 may be sequentially arranged along the upper side of the rear plate 250. The 22nd adhesive members AD22 may be spaced apart from each other.

A 23rd adhesive member AD23 may be sequentially arranged along the lower side of the rear plate 250, and may be fixed to the rear surface of the rear plate 250. There may be a plurality of 23rd adhesive members AD23, and may be spaced apart from each other. The 23rd adhesive member AD23 may be formed by a short section.

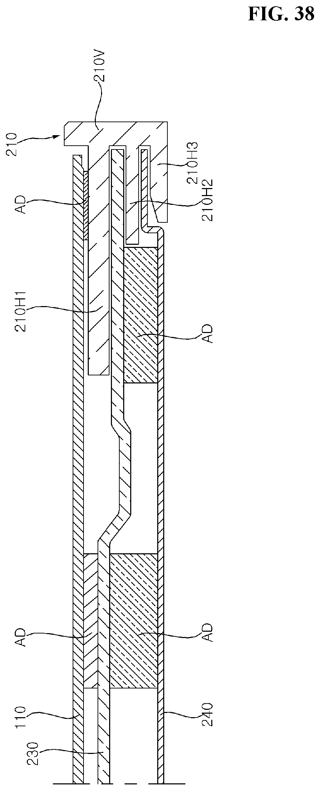

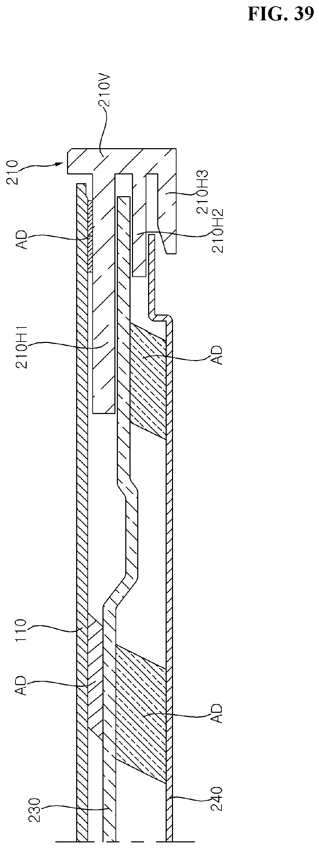

Referring to FIGS. 38 and 39, the main frame 210 may include a vertical portion 210V, a front horizontal portion 210H1, a middle horizontal portion 210H2, and a rear horizontal portion 210H3. The front horizontal portion 210H1 may face the middle horizontal portion 210H2. The rear horizontal portion 210H3 may be opposite to the front horizontal portion 210H1 with respect to the middle horizontal portion 210H2. The vertical portion 210V may connect the front horizontal portion 210H1, the middle horizontal portion 210H2, and the rear horizontal portion 210H3. A gap may be formed between the front horizontal portion 210H1 and the middle horizontal portion 210H2, and a gap may be formed between the middle horizontal portion 210H2 and the rear horizontal portion 210H3.

The display panel 110 may be coupled to the main frame 210. The adhesive member AD may be fixed to the front horizontal portion 210H1 of the main frame 210, and the display panel 110 may be fixed to the adhesive member AD. The inner plate 230 may be positioned at the rear of the display panel 110. The adhesive member AD may be fixed to the front surface of the inner plate 230, and the display panel 110 may be fixed to the inner plate 230 by the adhesive member AD. The inner plate 230 may be inserted into between the gap formed by the front horizontal portion 210H1 and the middle horizontal portion 210H2.

The outer plate 240 may be positioned at the rear of the inner plate 230. The outer plate 240 may be coupled or fixed to the inner plate 230 by the adhesive member AD. The outer plate 240 may be inserted into between the gap formed between the middle horizontal portion 210H2 and the rear horizontal portion 210H3.

As the display panel 110 is curved, the display panel 110 and the inner plate 230 may relatively slip. In addition, the inner plate 230 and the outer plate 240 may relatively slip. The adhesive members AD may correspond to the slip between the display panel 110 and the inner plate 230, and between the inner plate 230 and the outer plate 240. The adhesive members AD may be deformed. The inner plate 230 may be moved away from the main frame 210, and the outer plate 240 may be moved away from the main frame 210. For example, the slip between the inner plate 230 and the outer plate 240 may occur by about 2 millimeters. For another example, the slip between the display panel 110 and the inner plate 230 may occur by about 0.9 to 1 millimeter.

Referring to FIGS. 40 to 42, the display panel 110 may be supported by or partially fixed to the horizontal portion 210H of the main frame 210. The horizontal portion 210H of the main frame 210 may extend parallel to the rear surface of the display panel 110 and face the display panel 110. The vertical portion 210V of the main frame 210 may extend in a direction intersecting with the horizontal portion 210H. The vertical portion 210V of the main frame 210 may cover the side surface of the display panel 110.

The inner plate 230 may face the rear surface of the display panel 110. The inner plate 230 may support the rear surface of the display panel 110. The display panel 110 may be partially fixed to the inner plate 230. The inner plate 230 may have a pressed and curved step portion 235. The gap between the flat portion 231 (see FIG. 34) of the inner plate 230 and the display panel 110 may be smaller than the gap between the step portion 235 of the inner plate 230 and the display panel 110. The horizontal portion 210H of the main frame 210 may be inserted into between the display panel 110 and the step portion 235 of the inner plate 230.

The outer plate 240 may face the rear surface of the inner plate 230. The outer plate 240 may be partially fixed to the inner plate 230. The outer plate 240 may include a flat portion 240H and a side portion 240V. The flat portion 240H may be a thin and wide metal plate. The side portion 240V may be formed by bending from the flat portion 240H. The side portion 240V may include a first side portion 240V1 and a second side portion 240V2. The first side portion 240V1 may extend while being bent from the flat portion 240H. For example, the first side portion 240V1 may be bent vertically from the flat portion 240H. The second side portion 240V2 may extend while being bent from the first side portion 240V1. The second side portion 240V2 may face the first side portion 240V1. For example, the second side portion 240V2 may be extended while being folded from the first side portion 240V1. The side portion 240V may be positioned between the vertical portion 210V of the main frame 210 and the distal end of the inner plate 230.

Accordingly, when the display panel 110 is curved, slip may occur between the display panel 110 and the inner plate 230, and slip may occur between the inner plate 230 and the outer plate 240. In addition, slip may occur between the main frame 210 and the inner plate 230. In addition, the main frame 210 may relatively move with respect to the outer frame 240.

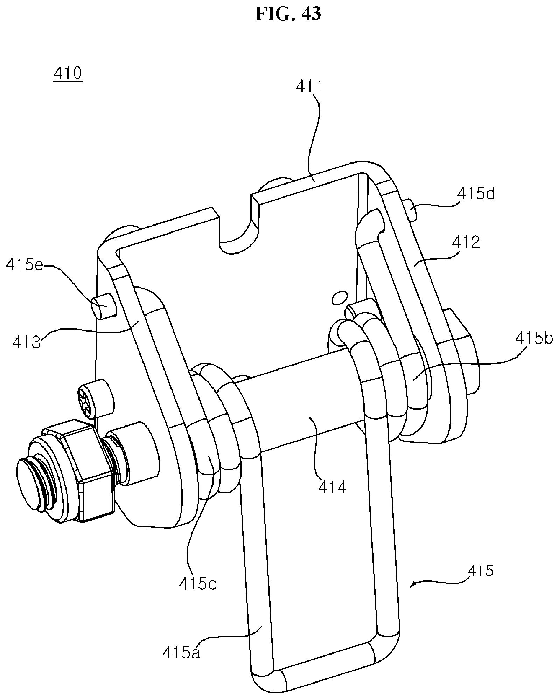

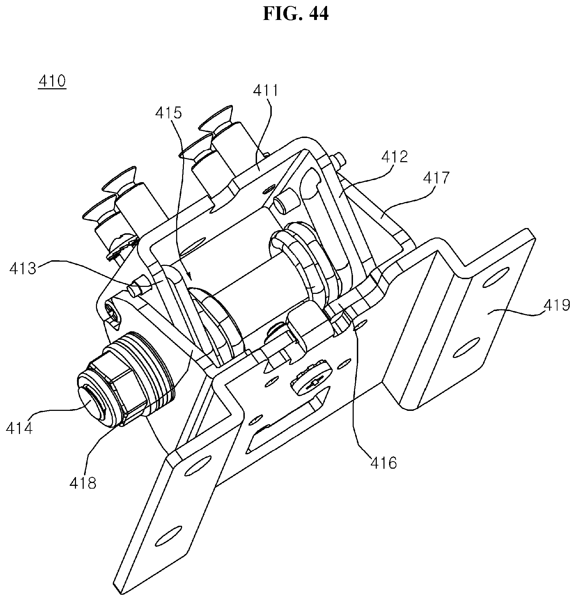

Referring to FIGS. 43 and 44, a tilting module 410 may include a head bracket 419, a front bracket 416, 417, 418, and a rear bracket 411, 412, 413. The display panel 110 (see FIG. 2), the bottom cover 120, and the driving module 130 may be coupled or fixed to the head bracket 419. The tilting module 410 may be referred to as a bracket module 410.

The front bracket 416, 417, 418 may include a first part 416, a first side part 417, and a second side part 418. The rear bracket 411, 412, 413 may include a second part 411, a third side part 412, and a fourth side part 413. The first part 416 may face the second part 411, and the first side part 417 may be in contact with or rub against the third side part 412. The second side part 418 may be in contact with or rub against the fourth side part 413.

The front bracket 416, 417, 418 may be opposite to the driving module 130 (see FIG. 2) with respect to the head bracket 419. The front bracket 416, 417, 418 may be coupled or fixed to the head bracket 419. The rear bracket 411, 412, 413 may be pivotally coupled to the front bracket 416, 417, 418. The tilting shaft 414 may be inserted into the front bracket 416, 417, 418 and the rear bracket 411, 412, 413. The front bracket 416, 417, 418 may be tilted with respect to the rear bracket 411, 412, 413 about the tilting shaft 414.

The elastic member 415 may include a lever portion 415a, a support portion 415d, 415e, and a coil portion 415b, 415c. The elastic member 415 may be formed of a wire. The elastic member 415 may be referred to as a tilting elastic member 415.

The lever portion 415a may be a wire bent in a U shape. The coil portion 415b, 415c may be connected to the lever portion 415a. There may be a plurality of coil portions 415b, 415c. A first coil portion 415b may be connected to one end of the lever portion 415a, and a second coil portion 415c may be connected to the other end of the lever portion 415a. There may be a plurality of support portions 415d, 415e. A first support portion 415d may form the distal end of the first coil portion 415b, and a second support portion 415e may form the distal end of the second coil portion 415c.

When the support portion 415d, 415e is fixed, the lever portion 415a may rotate or pivot around the coil portion 415b, 415c. The coil portion 415b, 415c may provide elasticity to the lever portion 415a.

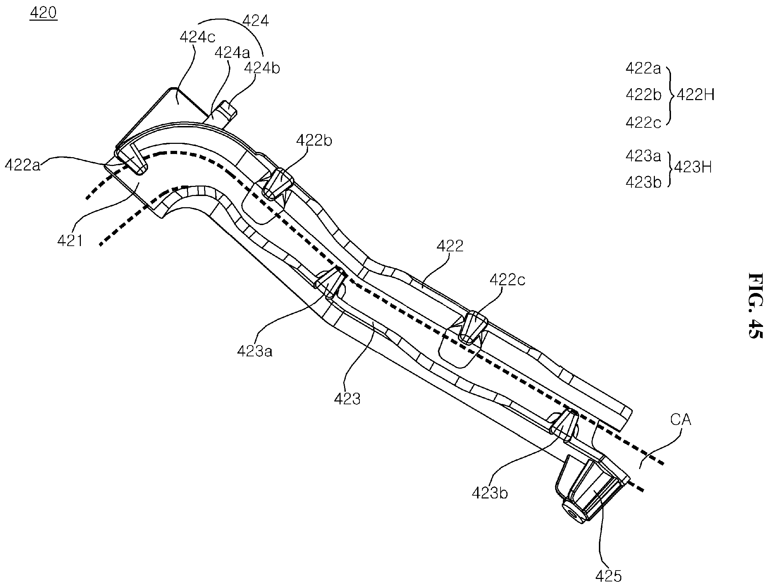

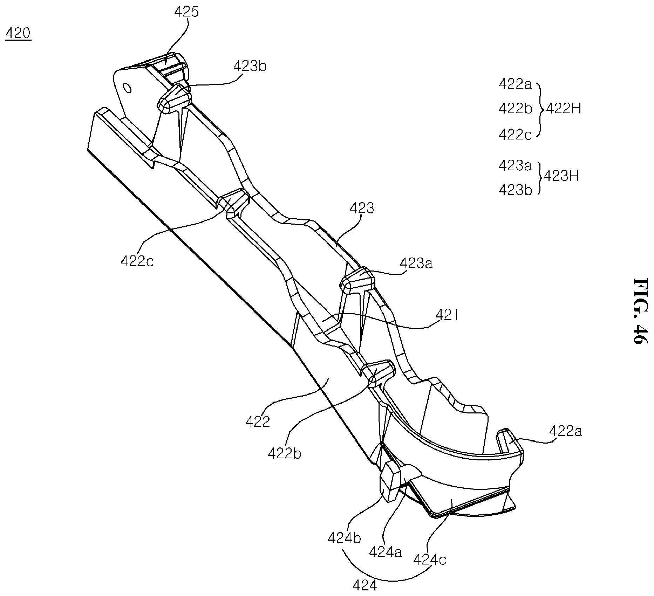

Referring to FIGS. 45 and 46, the cable guide 420 may include a bottom 421, a first side wall 422, and a second side wall 423. The bottom 421 may be extended in a plate shape. The first side wall 422 may be formed on one side of the bottom 421 while forming a wall with respect to the bottom 421. It may be formed on the other side of the bottom 421 while facing the first side wall 422 with respect to the second side wall 423 and forming a wall with respect to the bottom 421. For example, the first side wall 422 may be opposite to the second side wall 423 while maintaining a certain distance, and may be extended while bending.

A pivot connector 425 may be positioned at one end of the cable guide 420. The pivot connector 425 may be formed on the outer surface of the second side wall 423. The pivot connector 425 may be formed by protruding from the outer surface of the second side wall 423.

The slide connector 424 may be positioned at the other end of the cable guide 420. The slide connector 424 may be formed on the outer surface of the first side wall 422. The slide connector 424 may be formed by protruding from the outer surface of the first side wall 423.

The slide connector 424 may include a rib 424c, a connector shaft 424a, and a slide head 424b. The rib 424c may be adjacent to the other end of the first side wall 422 and protrude while extending in the length direction of the first side wall 422. For example, the first side wall 422 may form a convexly curved surface in the direction of the rib 424c, and the rib 424c may be formed on the curved surface. The connector shaft 424a may protrude from the rib 424c or may be formed together with the rib 424c. The distal end of the connector shaft 424a may protrude from the edge of the rib 424c. The slide head 424b may be formed on the connector shaft 424a. The size of the slide head 424b may be larger than the size of the cross-section of the connector shaft 424a.

There may be a plurality of cable holders 422H, 423H. The cable holder 422H, 423H may be formed on the edge of the upper side of the first side wall 422 and/or the second side wall 423. A first holder 422a may be positioned at the distal end of the curved first side wall 422.

The first holder 422a may protrude from the upper edge of the first side wall 422 and may extend toward the second side wall 423. A second holder 422b may protrude from the upper edge of the first side wall 422, may extend toward the second side wall 423, and may be spaced apart from the first holder 422a. A third holder 422c may protrude from the upper edge of the first side wall 422, may extend toward the second side wall 423, and may be spaced apart from the second holder 422b.

A fourth holder 423a may protrude from the upper edge of the second side wall 423, and may extend toward the first side wall 422. The fourth holder 423a may be positioned between the second holder 422b and the third holder 422c. A fifth holder 423b may protrude from the upper edge of the second side wall 423, and may extend toward the first side wall 422. The fifth holder 423b may be spaced apart from the fourth holder 423a. The third holder 422c may be positioned between the fourth holder 423a and the fifth holder 423b.

Accordingly, the cable CA may be firmly stored in the cable guide 420.

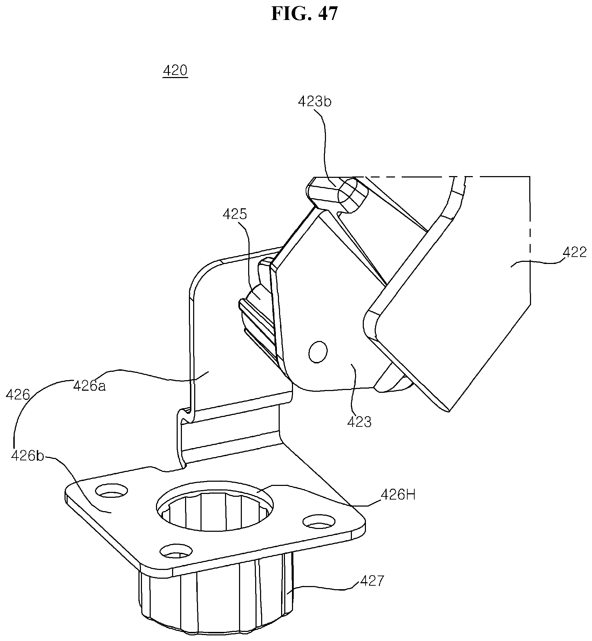

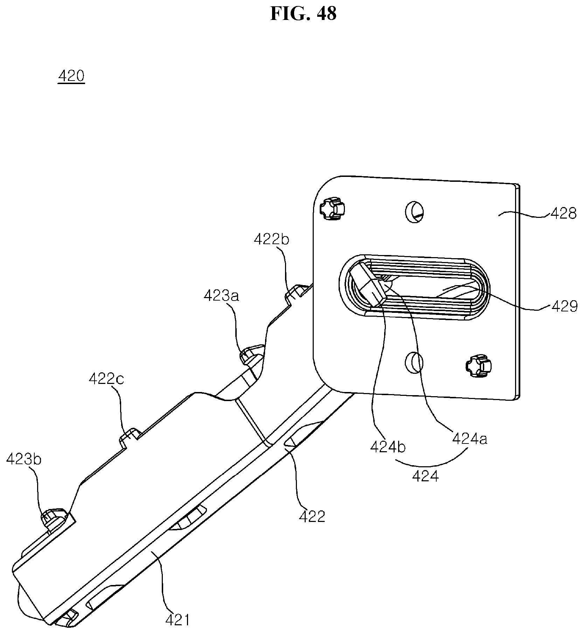

Referring to FIGS. 47 and 48, a tunnel bracket 426 may be coupled to the pivot connector 425. The tunnel bracket 426 may include a first part 426a and a second part 426b. The first part 426a may be a plate, and the pivot connector 426 may be rotatably coupled thereto. The second part 426b may be a plate, and may be bent from the first part 426a. The second part 426b may have an opening 426H.

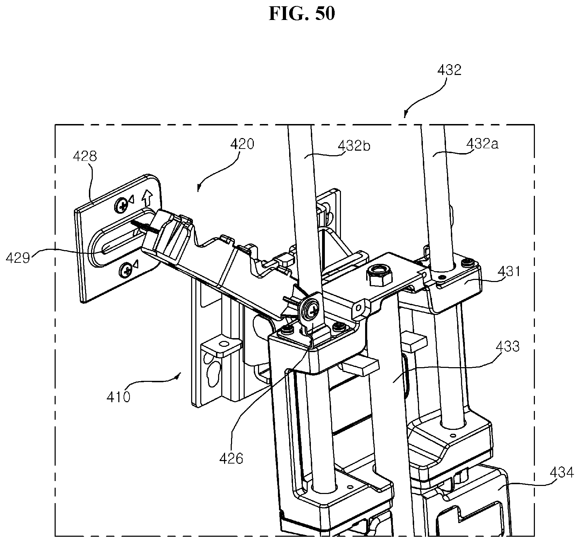

A shaft tunnel 427 may be coupled or fixed to the tunnel bracket 426. The shaft tunnel 427 may be coupled or fixed to the second part 426b of the tunnel bracket 426. The tunnel bracket 426 may be aligned to correspond to the opening 426H of the second part 426b. The shaft 432 (see FIG. 50) may penetrate the opening 426H of the tunnel bracket 426 and the shaft tunnel 427.

The slide guide 428, 429 may include a plate 428 and a guide slot 429. The guide slot 429 may be formed long by penetrating the plate 428. The connector shaft 424a and the slide head 424b may be inserted into the guide slot 429 of the slide guide 428, 429 and moved. For example, the guide slot 429 may be linear.

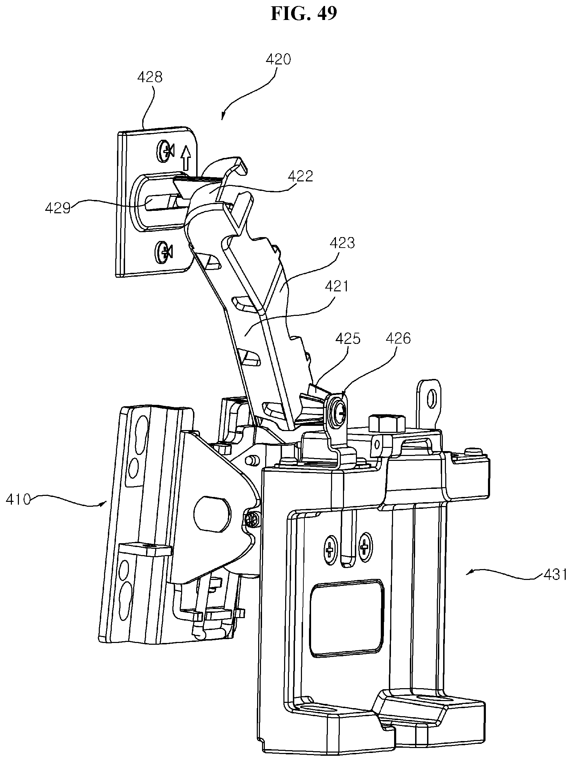

Referring to FIGS. 49 and 50, the tilting module 410 may be coupled to an elevating block 431. The rear bracket 411, 412, 413 of the tilting module 410 may be fixed to the elevating block 431. The tunnel bracket 426 may be fixed to the upper side of the elevating block 431.

The elevating block 431 may be moved on the guide shaft 432. There may be a plurality of guide shafts 432 and may be extended in the vertical direction. The plurality of guide shafts 432a, 432b may be arranged parallel to each other. The position of the guide shaft 432 may be fixed. The elevating block 431 may move stably on the plurality of guide shafts 432a, 432b.

A lifting member 433 may be coupled to the elevating block 431. The lifting member 433 may be, for example, a gas spring 433. One end of the gas spring 433 may be fixed to the elevating block 431, and the other end of the gas spring 433 may be coupled to a backbone block 434. The gas spring 433 may push the elevating block 431.

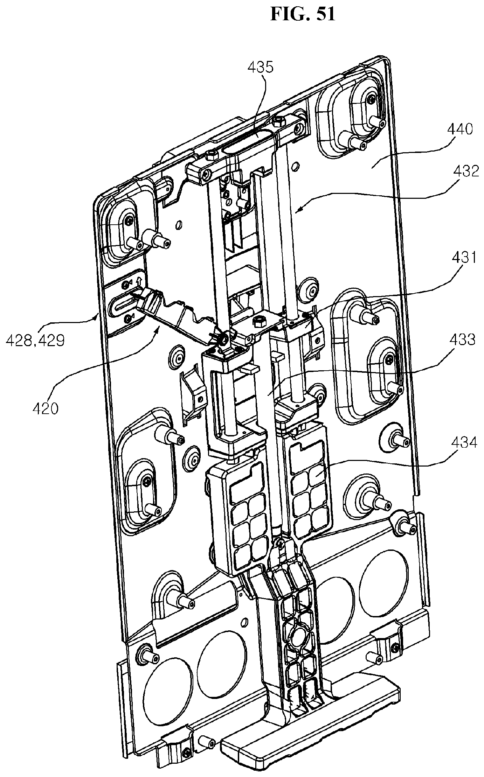

Referring to FIGS. 51 to 55, the backbone block 434 may be coupled or fixed to a backbone plate 440. The backbone plate 440 may have an open area between the guide shafts 432. A top block 435 may be positioned on the upper side of the backbone block 434, and may be coupled or fixed to the backbone plate 440. The guide shaft 432 may connect the top block 435 and the backbone block 434. One end of the guide shaft 432 may be fixed to the backbone block 434, and the other end of the guide shaft 432 may be fixed to the top block 435. The slide guide 428, 429 may be coupled or fixed to the backbone plate 440.

The elevating block 431 may move in the up-down direction on the guide shaft 432. At this time, the lifting member 433 may push the elevating block 431 to support the load applied to the elevating block 431. When the elevating block 431 moves in the up-down direction, the cable guide 420 may pivot around the tunnel bracket 426. When the cable guide 420 pivots around the tunnel bracket 426, the slide connector 424 may move in the left-right direction in the slot 429 of the slide guide 428, 429.

A back case 450 may be coupled to the backbone plate 440. The back case 450 may cover all of the front, rear, and/or side surface of the backbone plate 440. The head bracket 419 may move in the up-down direction in the front of the back case 450.

Accordingly, the adjustment of the cable CA length that may occur during the process where the display panel 110 and the module cover 120 move in the up-down direction may be performed while maintaining a firm connection of the cable CA without damaging the cable CA.

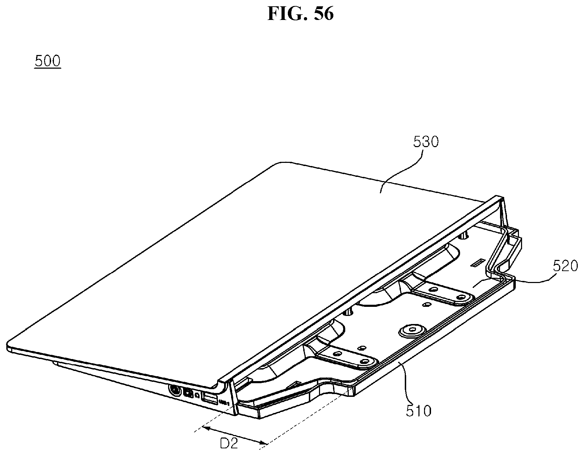

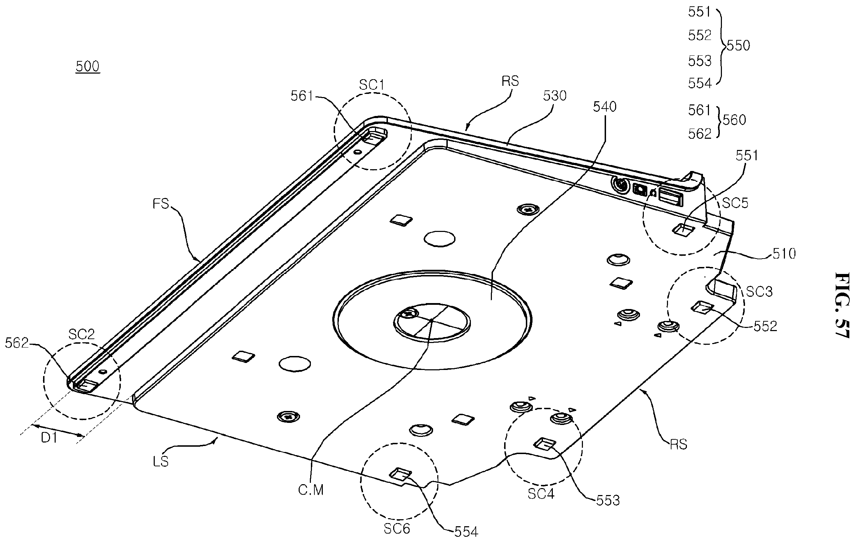

Referring to FIGS. 56 and 57, a stand 500 may include a lower cover 510, an upper cover 530, and a stand frame 520. The lower cover 510 may form the lower surface of the stand 500. The upper cover 530 may be coupled to the lower cover 510, and may form the upper surface of the stand 500. The stand frame 520 may be positioned between the lower cover 510 and the upper cover 530.

The stand frame 520 may be formed of a metal plate. In order to secure the rigidity of the stand frame 520, the stand frame 520 may be pressed to form a bend. The stand frame 520 may have a high weight.

The upper case 530 may overlap with the lower case 510. The upper case 530 may cover the front of the upper surface of the lower case 510, and the rear of the upper surface of the lower case 510 may be exposed to the outside. The lower case 510 may cover the rear of the lower surface of the upper case 530, and the front of the lower surface of the upper case 530 may be exposed to the outside. A first distance D1 between the front edge of the upper case 530 and the front edge of the lower case 510 may be formed. A second distance D2 between the rear edge of the upper case 530 and the rear edge of the lower case 510 may be formed. The upper case 530 and the lower case 510 may be referred to as a stand case 510, 530.

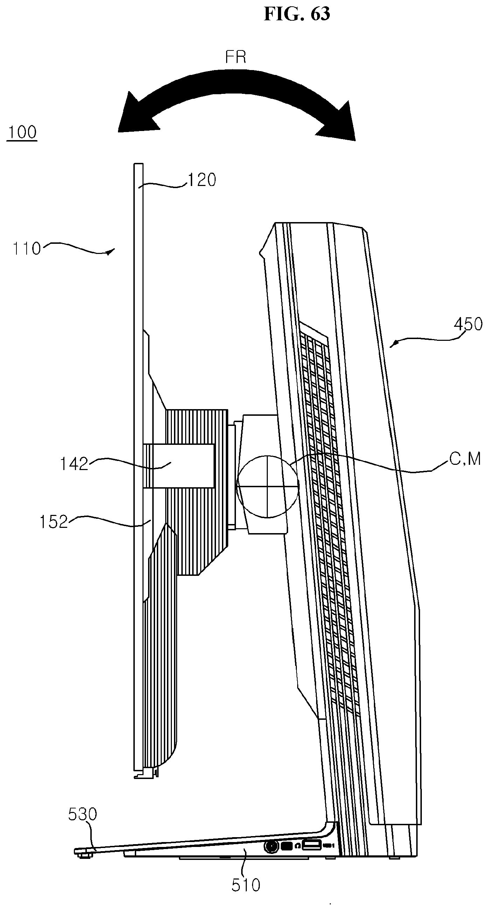

A center circle 540 may be coupled or fixed to the lower surface of the lower case 510. The center circle 540 may be referred to as a slip sheet 540 or a disk 540. For example, the center circle 540 may be a donut shape. For another example, the center circle 540 may be a friction plate. For another example, the center circle 540 may be a non-woven fabric. For another example, the center circle 540 may have a thickness of 2.0 millimeters to 4.5 millimeters. The center of the center circle 540 may be aligned with the center of gravity CM (see FIG. 63) of the display device 100.

A plurality of feet 550, 560 may be fixed to the lower surface of the stand 500. A first foot 551, a second foot 552, a third foot 553, and/or a fourth foot 554 may be arranged adjacent to the rear edge of the lower case 510, and sequentially spaced apart from each other along the rear edge of the lower case 510. For example, the first foot 551, the second foot 552, the third foot 553, and/or the fourth foot 554 may be a rubber.

A fifth foot 561 and a sixth foot 562 may be arranged adjacent to the front edge of the upper case 530, and sequentially spaced apart from each other along the front edge of the upper case 530. The fifth foot 561 may be arranged adjacent to the front one corner SC1 of the upper case 530, and the sixth foot 562 may be arranged adjacent to the front other corner SC2 of the upper case 530. For example, the fifth foot 561 and/or the sixth foot 562 may be a rubber.

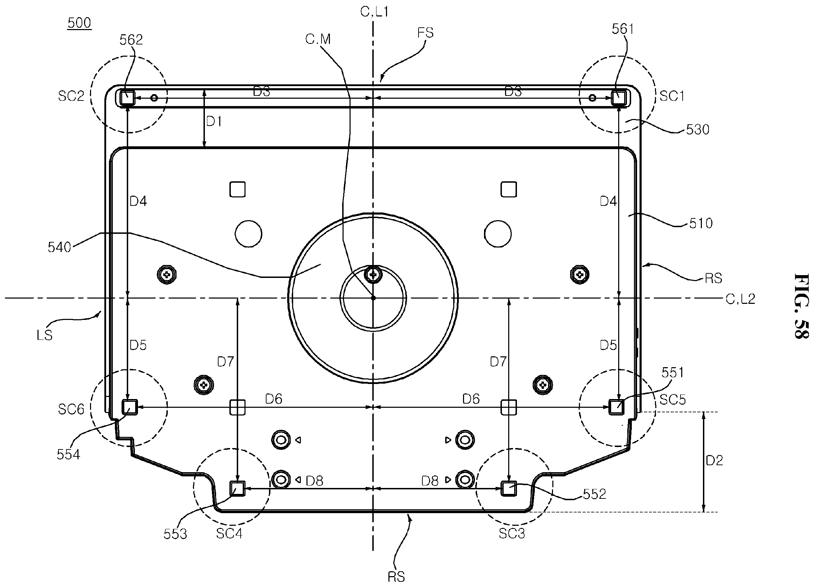

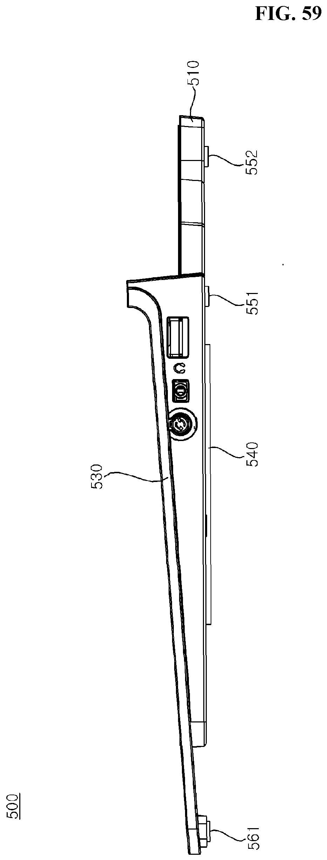

Referring to FIGS. 58 and 59, the stand may include a front side FS, a rear side RS, a left side LS, and a right side RS. A first corner SC1 may be a corner of the front side FS and the right side RS, and a second corner SC2 may be a corner of the front side FS and the left side LS. A third corner SC3 and a fifth corner SC5 may be corners of the rear side RS and the right side RS. The third corner SC3 may be closer to the rear side RS than the fifth corner SC5. The fifth corner SC5 may be closer to the right side RS than the third corner SC3. A fourth corner SC4 and a sixth corner SC6 may be corners of the rear side RS and the left side LS. The fourth corner SC4 may be closer to the rear side RS than the sixth corner SC6. The sixth corner SC6 may be closer to the left side LS than the fourth corner SC4.

The fifth foot 561 may be positioned at the first corner SC1, and the sixth foot 562 may be positioned at the second corner SC2. The first foot 551 may be positioned at the fifth corner SC5, and the second foot 552 may be positioned at the third corner SC3. The third foot 553 may be positioned at the fourth corner SC4, and the fourth foot 554 may be positioned at the sixth corner SC6.

The center circle 540 may have a first central shaft CL1 parallel to the left side LS or the right side RS of the stand 500 and a second central shaft CL2 parallel to the front side FS or the rear side RS of the stand 500. The second central shaft CL2 may intersect with the first central shaft CL1. For example, the second central shaft CL2 may be orthogonal to the first central shaft CL1.

The fifth foot 561 may be positioned at a third distance D3 from the first central shaft CL1. The sixth foot 562 may be positioned at the third distance D3 from the first central shaft CL1. The fifth foot 561 may be positioned at a fourth distance D4 from the second central shaft CL2. The sixth foot 562 may be positioned at the fourth distance D4 from the second central shaft CL2.

The first foot 551 may be positioned at a fifth distance D5 from the second central shaft CL2. The fourth foot 554 may be positioned at the fifth distance D5 from the second central shaft CL2. The first foot 551 may be positioned at a sixth distance D6 from the first central shaft CL1. The fourth foot 554 may be positioned at the sixth distance D6 from the first central shaft CL1.

The second foot 552 may be positioned at an eighth distance D8 from the first central shaft CL1, and positioned at a seventh distance D7 from the second central shaft CL2. The third foot 553 may be positioned at the eighth distance D8 from the first central shaft CL1, and positioned at the seventh distance D7 from the second central shaft CL2.

The seventh distance D7 may be greater than the fifth distance D5. The fourth distance D4 may be greater than the seventh distance D7. The third distance D3 may be equal to the sixth distance D6. The sixth distance D6 may be greater than the eighth distance D8.

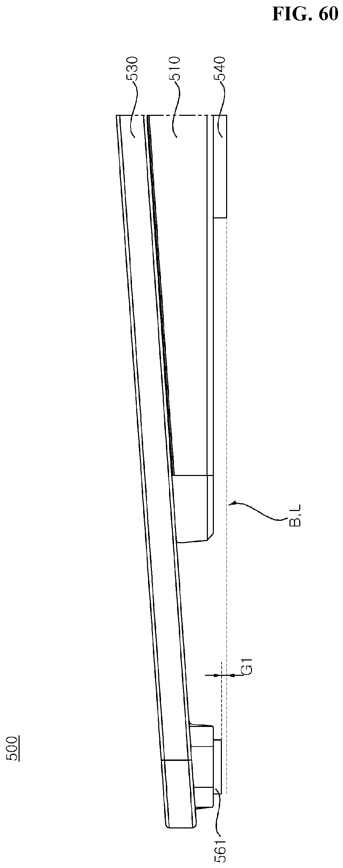

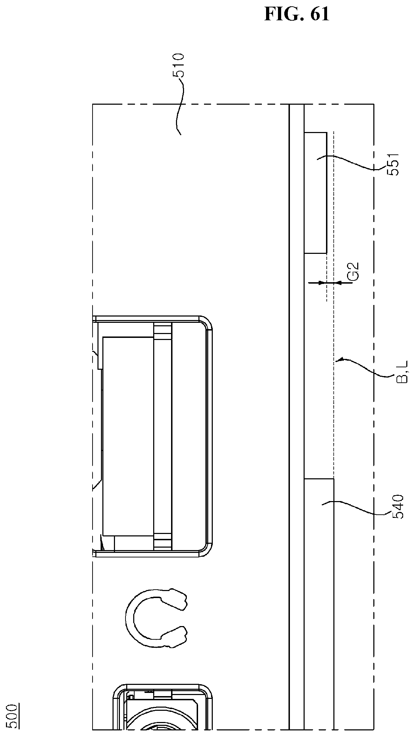

Referring to FIGS. 60 and 61, the stand 500 may be placed on a flat bottom BL. The bottom BL may be referred to as a floor surface BL. The center circle 540 may be in contact with the bottom BL, and the bottom BL may support the stand 500. The center circle 540 may be referred to as a circle member 540, a rotating member 540, or a shifting member 540. The fifth foot 561 may form a first gap G1 from the bottom BL. The fifth foot 561 may be spaced from the bottom BL when the center circle 540 is in full contact with the bottom BL. The same description as the fifth foot 561 may be applied to the sixth foot 562 (see FIG. 58).

The center circle 540 may be in contact with the bottom BL, and the bottom BL may support the stand 500. The first foot 551 may form a second gap G2 from the bottom BL. The first foot 551 may be spaced from the bottom BL when the center circle 540 is in full contact with the bottom BL. The same description as the first foot 551 may be applied to the second foot 552, the third foot 553, or the fourth foot 554.

The center circle 540 may partially be in contact with the bottom BL, and the bottom BL may support the stand 500. When a part of the center circle 540 is in contact with the bottom BL, at least one of the first foot 551, the second foot 552, the third foot 553, the fourth foot 554, the fifth foot 561, and the sixth foot 562 may be in contact with the bottom BL. When the foot 551, 552, 553, 554, 561, 562 is in contact with the bottom BL, the foot 551, 552, 553, 554, 561, 562 may maintain a grip with respect to the bottom BL with high frictional force.

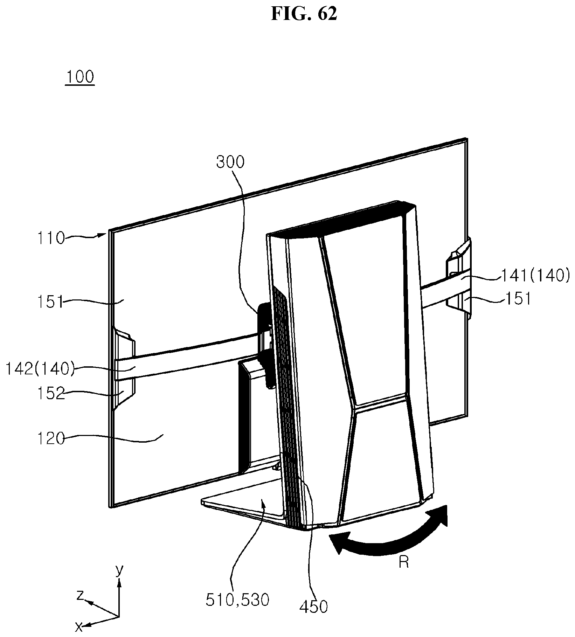

Referring to FIG. 62 and FIG. 63 together with FIG. 59 to FIG. 61, a user may rotate (R) the display device 100. In order to change the direction in which the display panel 110 provides an image, a user may rotate (R) the display device 100 around the center circle 540 of the stand 500. The display device 100 may be easily rotated (R) by the center circle 540.

A user may shift the display device 100 in the front/rear (FR) left/right (not shown) direction. Since the display device 100 has a high center of gravity (CM), it may tilt in the front/rear (FR) or left/right direction and may overturn. When the display device 100 tilts in the front/rear (FR) or left/right direction, only a part of the center circle 540 of the stand 500 may be in contact with the bottom BL. At this time, the foot 551, 552, 553, 554, 561, 562 may grip the bottom BL while being in contact with the bottom BL. Accordingly, the display device 100 may be shifted in the front/rear (FR) or left/right direction while preventing the display device 100 from being overturned.

Referring to FIGS. 1 to 63, the display device may include: a display panel 110; a rear cover 120 which is positioned behind the display panel 110 and to which the display panel 110 is coupled; a bracket module 410 coupled with the rear cover 120; an elevating block 431 coupled with the bracket module 410; a guide shaft 432 which is inserted into the elevating block 431, and in which the elevating block 431 moves; a backbone plate 440 to which the guide shaft 432 is fixed; and a cable guide 420 which is elongated and has one end pivotally connected to the backbone plate 440 and the other end pivotally connected to the elevating block 431.

The cable guide 420 may include: a bottom 421 that is elongated in a plate shape; a first side wall 422 formed on one long edge of the bottom 421; and a second side wall 423 which is formed on the other long edge of the bottom 421 and opposite to the first side wall 422 with respect to the bottom 421.

The cable guide 420 may include: a pivot connector 425 that protrudes from the outer surface of the second side wall 423 and is pivotally connected to the elevating block 431; and a slide connector 424 that protrudes from the outer surface of the first side wall 422 and is pivotally connected to the backbone plate 440.

A slide guide 428, 429 to which the slide connector 424 is pivotally connected is further included, the slide guide 428, 429 may include: a plate 428 fixed to the backbone plate 440; and a guide slot 429 that is elongated and formed in the plate 428, and the slide connector 424 of the cable guide 420 may include: a connector shaft 424a inserted into the guide slot 429; and a slide head 424b which is formed at the distal end of the connector shaft 424a and larger than a diameter of the connector shaft 424a.

The extension direction of the guide slot 429 may intersect with the length direction of the guide shaft 432.

The cable guide 420 may further include: a cable holder 422H, 423H formed in at least one of the first side wall 422 and the second side wall 423, and the cable holder 422H, 423H can extend from the first side wall 422 in the direction of the second side wall 423 or from the second side wall 423 in the direction of the first side wall 422.

There may be a plurality of cable holders 422H, 423H, and the plurality of cable holders 422H, 423H may include a first plurality of cable holders 422H arranged to be spaced apart from each other along the length direction of the first side wall 422, and a second plurality of cable holders 423H which are arranged to be spaced apart from each other along the length direction of the second side wall 423, but alternately arranged with the first plurality of cable holders 422H formed on the first side wall 422.

A backbone block 434 which is coupled to the backbone plate 440 and to which the guide shaft 432 is fixed; and a stand 500 coupled to the backbone block 434 may be further included.

The stand 500 may further include: a lower case 510 forming a bottom; an upper case 530 which is coupled with the lower case 510 and forms an upper surface; and a stand frame 520 which is positioned between the upper case 530 and the lower case 510 and to which the backbone block 434 is fixed may be further included.

A driving module 130 which is positioned behind the rear cover 120 and has a moving block 134 that moves reciprocally; a wing bracket 131, 132 which is adjacent to the driving module 130 and fixed to the rear of the rear cover 120; and a wing 141, 142 that is extended long and has one end fixed to the moving block 134 and the other end coupled to the rear cover 120, and is pivotally connected to the wing bracket 131, 132 at between the one end and the other end are included, and the rear cover 120, 200 includes: a flexible main frame 210 that extends along the side surface of the display panel 110; an inner plate 230 that faces the rear surface of the display panel 110 and is coupled to the main frame 210; and a side bracket 220 that is adjacent to one side of the display panel 110 and is coupled to the main frame 210, and the display panel 110 can be flexible.

The display device includes: a display panel 110; a rear cover 120 which is positioned behind the display panel 110, and to which the display panel 110 is coupled; a back case 450 which is positioned behind the rear cover 120, and to which the rear cover 120 is coupled; and a stand 500 coupled to a lower end of the back case 450, wherein the stand 500 includes: a stand case 510, 530 forming a bottom surface; and a circle-shaped disk 540 fixed to the bottom surface of the stand case 510, 530.

The stand 500 further includes a plurality of feet 550, 560 which are fixed to the bottom surface of the stand case 510, 530, and arranged around the disk 540.

A thickness of the disk 540 is greater than a height of the feet 550, 560.

The plurality of feet 550, 560 are arranged adjacent to an edge of the stand case 510, 530.

The stand case 510, 530 includes: an upper case 530 forming an upper surface; a lower case 510 which forms a lower surface, and is coupled with the upper case 530; and a stand frame 520 which is positioned between the upper case 530 and the lower case 510, and to which the back case 450 is fixed, wherein the disk 540 is fixed to the lower surface of the lower case 510, and a center of the disk 540 is aligned with respect to a center of gravity of the display device.

The center of the disk 540 is positioned between the display panel 110 and the back case 450.

The back case 450 includes: a backbone block 434 fixed to the stand 500; a guide shaft 432 which is elongated and has one end fixed to the backbone block 434; and an elevating block 431 into which the guide shaft 432 is inserted, and which moves in the guide shaft 432, wherein the rear cover 120 is coupled to the elevating block 431 by a tilting module 410.

The tilting module 410 includes: a rear bracket 411, 412, 413 fixed to the elevating block 431; a front bracket 416, 417, 418 which is connected to the rear bracket 411, 412, 413 by a shaft 414, and pivots with respect to the rear bracket 411, 412, 413; and a head bracket 419 which is coupled to the rear cover 120, and fixed to the front bracket 416, 417, 418.

The back case 450 further includes a lifting member 433 having one end supported by the backbone block 434 and the other end fixed to the elevating block 431.

The display device further includes a driving module 130 having a moving block 134 which is positioned behind the rear cover 120 and reciprocates; a wing bracket 131, 132 which is adjacent to the driving module 130 and fixed to the rear of the rear cover 120; and a wing 141, 142 which is elongated and has one end fixed to the moving block 134 and the other end coupled to the rear cover 120, and is pivotally connected to the wing bracket 131, 132 at between the one end and the other end, wherein the rear cover 120 includes: a flexible main frame 210 extending along a lateral side of the display panel 110; an inner plate 230 which faces a rear surface of the display panel 110, and is coupled to the main frame 210; and a side bracket 220 which is adjacent to one side of the display panel 110, and coupled to the main frame 210, wherein the display panel 110 is flexible.

Certain embodiments or other embodiments of the invention described above are not mutually exclusive or distinct from each other. Any or all elements of the embodiments of the invention described above may be combined or combined with each other in configuration or function.

For example, a configuration "A" described in one embodiment of the invention and the drawings and a configuration "B" described in another embodiment of the invention and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments may be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A display device comprising:
a display panel (110);
a rear cover (120) which is positioned behind the display panel (110), and to which the display panel (110) is coupled;
a back case (450) which is positioned behind the rear cover (120), and to which the rear cover (120) is coupled; and
a stand (500) coupled to a lower end of the back case (450),
wherein the stand (500) comprises:
a stand case (510, 530) forming a bottom surface;
a circle-shaped disk (540) fixed to the bottom surface of the stand case (510, 530); and
a plurality of feet (550, 560) fixed to the bottom surface of the stand case (510, 530) and arranged around the disk (540),
wherein the bottom surface of the stand case (510, 530) on which the disk (540) is fixed and the bottom surface of the stand case (510,530) on which the plurality of feet (550,560) are formed as one body.

2. The display device of claim 1, wherein a thickness of the disk (540) is greater than a height of the feet (550, 560).

3. The display device of claim 2, wherein the plurality of feet (550, 560) are arranged adjacent to an edge of the stand case (510, 530).

4. The display device of claim 1, wherein the stand case (510, 530) comprises:
an upper case (530) forming an upper surface;
a lower case (510) which forms a lower surface, and is coupled with the upper case (530); and
a stand frame (520) which is positioned between the upper case (530) and the lower case (510), and to which the back case (450) is fixed,
wherein the disk (540) is fixed to the lower surface of the lower case (510), and a center of the disk (540) is aligned with respect to a center of gravity of the display device.

5. The display device of claim 1, wherein the center of the disk (540) is positioned between the display panel (110) and the back case (450).

6. The display device of claim 1, wherein the back case (450) comprises:
a backbone block (434) fixed to the stand (500);
a guide shaft (432) which is elongated and has one end fixed to the backbone block (434); and
an elevating block (431) into which the guide shaft (432) is inserted, and which moves in the guide shaft (432),
wherein the rear cover (120) is coupled to the elevating block by a tilting module (410).

7. The display device of claim 6, wherein the tilting module (410) comprises:
a rear bracket (411, 412, 413) fixed to the elevating block (431);
a front bracket (416, 417, 418) which is connected to the rear bracket (411, 412, 413) by a shaft, and pivots with respect to the rear bracket (411, 412, 413); and
a head bracket (419) which is coupled to the rear cover (120), and fixed to the front bracket (416, 417, 418).

8. The display device of claim 6, wherein the back case (450) further comprises a lifting member (433) having one end supported by the backbone block (434) and the other end fixed to the elevating block (431).

9. The display device of claim 1, further comprising:
a driving module (130) having a moving block (134) which is positioned behind the rear cover (120) and reciprocates;
a wing bracket (131, 132) which is adjacent to the driving module (130) and fixed to the rear of the rear cover (120); and
a wing (141, 142) which is elongated and has one end fixed to the moving block (134) and the other end coupled to the rear cover (120), and is pivotally connected to the wing bracket (131, 132) at between the one end and the other end,
wherein the rear cover (120) comprises:
a flexible main frame (210) extending along a lateral side of the display panel (110);
an inner plate (230) which faces a rear surface of the display panel (110), and is coupled to the main frame (210); and
a side bracket (220) which is adjacent to one side of the display panel (110), and coupled to the main frame (210),
wherein the display panel (110) is flexible.

## Patentansprüche

1. Anzeigevorrichtung, die aufweist:
ein Anzeigefeld (110);
eine hintere Abdeckung (120), die hinter dem Anzeigefeld (110) positioniert ist und mit der das Anzeigefeld (110) gekoppelt ist;
einem hinteres Gehäuse (450), das hinter der hinteren Abdeckung (120) positioniert ist und mit dem die hintere Abdeckung (120) gekoppelt ist; und
einem Ständer (500), der mit einem unteren Ende des hinteren Gehäuses (450) gekoppelt ist,
wobei der Ständer (500) aufweist:
ein Ständergehäuse (510, 530), das eine Bodenfläche bildet;
eine kreisförmige Scheibe (540), die an der Bodenfläche des Ständergehäuses (510, 530) befestigt ist; und
mehrere Füße (550, 560), die an der Bodenfläche des Ständergehäuses (510, 530) befestigt und um die Scheibe (540) herum angeordnet sind,
wobei die Bodenfläche des Ständergehäuses (510, 530), an der die Scheibe (540) befestigt ist, und die Bodenfläche des Ständergehäuses (510, 530), an der die mehreren Füße (550, 560) ausgebildet sind, als ein Körper ausgebildet sind.

2. Anzeigevorrichtung nach Anspruch 1, wobei die Dicke der Scheibe (540) größer ist als die Höhe der Füße (550, 560).

3. Anzeigevorrichtung nach Anspruch 2, wobei die mehreren Füße (550, 560) benachbart zu einer Kante des Ständergehäuses (510, 530) angeordnet sind.

4. Anzeigevorrichtung nach Anspruch 1, wobei das Ständergehäuse (510, 530) aufweist:
ein oberes Gehäuse (530), das eine Oberseite bildet;
ein unteres Gehäuse (510), das eine Unterseite bildet und mit dem oberen Gehäuse (530) gekoppelt ist; und
einen Ständerrahmen (520), der zwischen dem oberen Gehäuse (530) und dem unteren Gehäuse (510) positioniert ist und an dem das hinteres Gehäuse (450) befestigt ist, wobei die Scheibe (540) an der Unterseite des unteren Gehäuses (510) befestigt ist und ein Mittelpunkt der Scheibe (540) in Bezug auf einen Schwerpunkt der Anzeigevorrichtung ausgerichtet ist.

5. Anzeigevorrichtung nach Anspruch 1, wobei der Mittelpunkt der Scheibe (540) zwischen dem Anzeigefeld (110) und dem hinteren Gehäuse (450) positioniert ist.

6. Anzeigevorrichtung nach Anspruch 1, wobei das hintere Gehäuse (450) aufweist:
einen Rückgratblock (434), der am Ständer (500) befestigt ist;
eine Führungswelle (432), die länglich ist und deren eines Ende am Rückgratblock (434) befestigt ist; und
einen Hebeblock (431), in den die Führungswelle (432) eingesetzt ist und der sich auf der Führungswelle (432) bewegt,
wobei die hintere Abdeckung (120) über ein Kippmodul (410) mit dem Hebeblock gekoppelt ist.

7. Anzeigevorrichtung nach Anspruch 6, wobei das Kippmodul (410) aufweist:
eine hintere Halterung (411, 412, 413), die am Hebeblock (431) befestigt ist;
eine vordere Halterung (416, 417, 418), die durch eine Welle mit der hinteren Halterung (411, 412, 413) verbunden ist und in Bezug auf die hintere Halterung (411, 412, 413) schwenkbar ist; und
eine Kopfhalterung (419), die mit der hinteren Abdeckung (120) gekoppelt und an der vorderen Halterung (416, 417, 418) befestigt ist.

8. Anzeigevorrichtung nach Anspruch 6, wobei das hintere Gehäuse (450) ferner ein Hebeelement (433) aufweist, dessen eines Ende vom Rückgratblock (434) getragen wird und dessen anderes Ende am Hebeblock (431) befestigt ist.

9. Anzeigevorrichtung nach Anspruch 1, die ferner aufweist:
ein Antriebsmodul (130) mit einem beweglichen Block (134), der hinter der hinteren Abdeckung (120) positioniert ist und sich hin- und herbewegt;
eine Flügelhalterung (131, 132), die zum Antriebsmodul (130) benachbart ist und an der Rückseite der hinteren Abdeckung (120) befestigt ist; und
einen Flügel (141, 142), der länglich ist und dessen eines Ende am beweglichen Block (134) befestigt ist und dessen anderes Ende mit der hinteren Abdeckung (120) gekoppelt ist, und der zwischen dem einen Ende und dem anderen Ende schwenkbar mit der Flügelhalterung (131, 132) verbunden ist,
wobei die hintere Abdeckung (120) aufweist:
einen flexiblen Hauptrahmen (210), der sich entlang einer lateralen Seite des Anzeigefelds (110) erstreckt;
eine innere Platte (230), die einer Rückseite des Anzeigefelds (110) zugewandt ist und mit dem Hauptrahmen (210) gekoppelt ist; und
eine Seitenhalterung (220), die zur einer Seite des Anzeigefelds (110) benachbart ist und mit dem Hauptrahmen (210) gekoppelt ist,
wobei das Anzeigefeld (110) flexibel ist.

## Revendications

1. Dispositif d'affichage, comprenant :
un écran d'affichage (110) ;
une protection arrière (120) positionnée derrière l'écran d'affichage (110) et à laquelle l'écran d'affichage (110) est raccordé ;
un boîtier arrière (450) positionné derrière la protection arrière (120) et auquel la protection arrière (120) est raccordée ; et
un socle (500) raccordé à une extrémité inférieure du boîtier arrière (450),
où le socle (500) comprend :
un boîtier de socle (510, 530) formant une surface inférieure ;
un disque de forme circulaire (540) fixé à la surface inférieure du boîtier de socle (510, 530) ; et
une pluralité de pieds (550, 560) fixés à la surface inférieure du boîtier de socle (510, 530) et disposés autour du disque (540),
où la surface inférieure du boîtier de socle (510, 530) sur laquelle le disque (540) est fixé et la surface inférieure du boîtier de socle (510, 530) sur laquelle la pluralité de pieds (550, 560) sont formés constituent un seul corps.

2. Dispositif d'affichage selon la revendication 1, où l'épaisseur du disque (540) est supérieure à la hauteur des pieds (550, 560).

3. Dispositif d'affichage selon la revendication 2, où la pluralité de pieds (550, 560) est disposée à proximité d'un bord du boîtier de socle (510, 530).

4. Dispositif d'affichage selon la revendication 1, où le boîtier de socle (510, 530) comprend :
un boîtier supérieur (530) formant une surface supérieure ;
un boîtier inférieur (510) formant une surface inférieure, et raccordé au boîtier supérieur (530) ; et
un cadre de socle (520) positionné entre le boîtier supérieur (530) et le boîtier inférieur (510), et sur lequel le boîtier arrière (450) est fixé,
où le disque (540) est fixé sur la surface inférieure du boîtier inférieur (510), et le centre du disque (540) est aligné par rapport au centre de gravité du dispositif d'affichage.

5. Dispositif d'affichage selon la revendication 1, où le centre du disque (540) est positionné entre l'écran d'affichage (110) et le boîtier arrière (450).

6. Dispositif d'affichage selon la revendication 1, où le boîtier arrière (450) comprend :
un bloc de base (434) fixé au socle (500) ;
un arbre de guidage (432) allongé, dont une extrémité est fixée au bloc de base (434) ; et
un bloc élévateur (431) où l'arbre de guidage (432) est inséré, et qui se déplace sur l'arbre de guidage (432),
où la protection arrière (120) est raccordée au bloc élévateur par un module d'inclinaison (410).

7. Dispositif d'affichage selon la revendication 6, où le module d'inclinaison (410) comprend :
un étrier arrière (411, 412, 413) fixé au bloc élévateur (431) ;
un étrier avant (416, 417, 418) relié à l'étrier arrière (411, 412, 413) par un arbre, et pivotant par rapport à l'étrier arrière (411, 412, 413) ; et
un étrier de tête (419) raccordé à la protection arrière (120) et fixé à l'étrier avant (416, 417, 418).

8. Dispositif d'affichage selon la revendication 6, où le boîtier arrière (450) comprend en outre un élément de levage (433) dont une extrémité est supportée par le bloc de base (434) et l'autre extrémité est fixée au bloc élévateur (431).

9. Dispositif d'affichage selon la revendication 1, comprenant en outre :
un module d'entraînement (130) comportant un bloc mobile (134) positionné derrière la protection arrière (120) et effectuant un mouvement alternatif ;
un support d'aileron (131, 132) adjacent au module d'entraînement (130) et fixé à l'arrière de la protection arrière (120) ; et
un aileron (141, 142) allongé, dont une première extrémité est fixée au bloc mobile (134) et l'autre extrémité est raccordée à la protection arrière (120), et reliée de manière pivotante au support d'aileron (131, 132) entre la première extrémité et l'autre extrémité, où la protection arrière (120) comprend :
un cadre principal flexible (210) s'étendant le long d'un côté latéral de l'écran d'affichage (110) ;
une plaque intérieure (230) faisant face à une surface arrière de l'écran d'affichage (110) et raccordée au cadre principal (210) ; et
un support latéral (220) adjacent à un côté de l'écran d'affichage (110) et raccordé au cadre principal (210),
où l'écran d'affichage (110) est flexible.
